(19) Europäisches Patentamt
European Patent Office
Office européen des brevets

(11) EP 4 219 579 A1

(12) # EUROPÄISCHE PATENTANMELDUNG

(43) Veröffentlichungstag:
**02.08.2023 Patentblatt 2023/31**

(21) Anmeldenummer: **22153912.5**

(22) Anmeldetag: **28.01.2022**

(51) Internationale Patentklassifikation (IPC):
***C08G 18/28** (2006.01)* ***C08G 18/32** (2006.01)*
***C08G 18/44** (2006.01)* ***C08G 18/66** (2006.01)*
***C08G 18/79** (2006.01)* ***C08G 18/80** (2006.01)*

(52) Gemeinsame Patentklassifikation (CPC):
**C08G 18/282; C08G 18/3206; C08G 18/3275; C08G 18/44; C08G 18/6655; C08G 18/792; C08G 18/8064;** C08G 2110/0083

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude K12**
**51365 Leverkusen (DE)**

(54) **HERSTELLUNG VON ALIPHATISCHEN POLYURETHAN-WEICHSCHAUMSTOFFE IN EINEM PRÄPOLYMERVERFAHREN BASIEREND AUF ALIPHATISCHEN OLIGOMEREN POLYISOCYANATEN UND MONOHYDROXYFUNKTIONELLEN VERBINDUNGEN**

(57) Die vorliegende Erfindung betrifft ein Verfahren zur Herstellung von aliphatischen Polyurethan-Weichschaumstoffen in einem Präpolymerverfahren, die insbesondere keine oder nur eine sehr geringe Menge an metallorganischen Katalysatoren aufweisen, unter Verwendung von aliphatischen oligomeren Polyisocyanaten und monohydroxyfunktionellen Verbindungen sowie die Verwendung von aliphatischen oligomeren Polyisocyanaten in Kombination mit monohydroxyfunktionellen Verbindungen zur Herstellung von Polyurethan-Weichschaumstoffen mit einer sehr geringen Menge bzw. ohne metallorganischen Katalysatoren. Die Erfindung betrifft des Weiteren einen, bevorzugt flexiblen, aliphatischen Polyurethan-Weichschaumstoff der nach dem vorgenannten Verfahren hergestellt wird oder herstellbar ist und vorzugsweise eine niedrige Stauchhärte und/oder einen niedrigen Druckverformungsrest-Wert (DVR) besitzt, sowie dessen Verwendung, zum Beispiel für die Herstellung von körperstützenden Elementen wie Polstern, Matratzen, Möbeln, Schuheinlagen, Automobilarmauflagen, Automobilsitzen und Motorradsitzen. Außerdem betrifft die Erfindung eine lagerstabile Präpolymer-Mischung aus einem NCO-funktionellen Präpolymer und überschüssiger Komponente B).

EP 4 219 579 A1

## Beschreibung

Die vorliegende Erfindung betrifft ein Verfahren zur Herstellung von aliphatischen Polyurethan-Weichschaumstoffen in einem Präpolymerverfahren, die insbesondere keine oder nur eine sehr geringe Menge an metallorganischen Katalysatoren aufweisen, unter Verwendung von aliphatischen oligomeren Polyisocyanaten und monohydroxyfunktionellen Verbindungen sowie die Verwendung von aliphatischen oligomeren Polyisocyanaten in Kombination mit monohydroxyfunktionellen Verbindungen zur Herstellung von Polyurethan-Weichschaumstoffen mit einer sehr geringen Menge bzw. ohne metallorganischen Katalysatoren. Die Erfindung betrifft des Weiteren einen, bevorzugt flexiblen, aliphatischen Polyurethan-Weichschaumstoff der nach dem vorgenannten Verfahren hergestellt wird oder herstellbar ist und vorzugsweise eine niedrige Stauchhärte und/oder einen niedrigen Druckverformungsrest-Wert (DVR) besitzt, sowie dessen Verwendung, zum Beispiel für die Herstellung von körperstützenden Elementen wie Polstern, Matratzen, Möbeln, Schuheinlagen, Automobilarmauflagen, Automobilsitzen und Motorradsitzen. Außerdem betrifft die Erfindung eine lagerstabile Präpolymer-Mischung aus einem NCO-funktionellen Präpolymer und überschüssiger Komponente B).

## Stand der Technik

Weichschäume machen das größte Volumen für die Anwendung von Polyurethanen aus und sind die größte Kategorie von polymeren zellulären Materialien. Sie werden hauptsächlich für Polsterung in der Möbelindustrie, für Matratzen, in der Automobilindustrie sowie in der Textilindustrie verwendet. Gegenwärtig kommerziell erhältliche Weichschäume werden üblicherweise aus Erdöl basierten Polyolen und aromatischen Isocyanaten, meistens aus einer Mischung von Toluol-2,4-diisocyanat (2,4-TDI) und Toluol-2,6-diisocyanat (2,6-TDI) oder Diphenylmethandiisocyanat-Mischungen (MDI) hergestellt.

Konventionelle Polyurethanschäume auf Basis dieser aromatischen Isocyanate sind nicht farbstabil und verfärben nach einiger Zeit, während Polyurethanschäume auf Basis von aliphatischen Isocyananten farb- und lichtstabil sind. Zur Herstellung letztgenannter Schäume werden üblicherweise cycloaliphatische Isocyanate wie Isophorondiisocyanat (IPDI) oder Bis(4-isocyanato cyclohexyl)methan (H12MDI) eingesetzt (DE 2447067 A1). Linearaliphatische Diisocyanate werden normalerweise nicht bzw. nicht als alleinige Isocyanatkomponente verwendet, da die mechanischen Eigenschaften solcher Schäume relativ gering sind. So beschreibt US 2006/0160977 A1 die Verwendung einer Mischung aus Hexamethylendiisocyanat (HDI) mit entweder IPDI oder H12MDI zur Herstellung von Schäumen.

Lichtbeständige Schäume auf Basis von aliphatischen Isocyanaten / Polyisocyanaten mit einer oligomeren Struktur sind beispielsweise in EP0006150 B1, EP 3296336 A1 und WO 02/074826 A1 beschrieben. So offenbart die EP0006150 B1 die Verwendung von HDIbasierten Biureten oder von urethanmodifizierten Polyisocyanaten aus aliphatischen bzw. cycloaliphatischen Diisocyanaten und niedermolekularen Alkandiolen. Aus EP 3296336 A1 ist die Verwendung von auf Pentamethylenediisocyanat-basierten (PDI) Uretdionen zur Herstellung von Polyurethanen bekannt, wobei ebenfalls Isocyanurate und Allophante auf Basis von PDI oder HDI enthalten sein können. Schließlich offenbart die WO 02/074826 A1 die Verwendung von Isocyanuraten oder Biureten auf Basis alipahtischer Isocyanate, wie HDI. Durch Umsetzung mit langkettigen Polyetherpolyolen bzw. Polyesterpolyolen und Vernetzer sowie Treibmitteln und Schaumstabilisatoren können aus diesen Polyisocyanaten Polyurethan-Schäume erhalten werden.

Ein Nachteil bei der Verwendung aliphatischer Isocyanate beziehungsweise Polyisocyanate ist jedoch deren geringe Reaktivität im Vergleich zu den aromatischen Isocyanaten (wie beispielsweise TDI, MDI etc.). Aus diesem Grund ist meistens der Einsatz von Katalysatoren, insbesondere von im Vergleich zu den anorganischen Katalysatoren deutlich aktiveren metallorganischen Katalysatoren, notwendig. Metallorganische Katalysatoren haben jedoch den Nachteil, dass diese im Verdacht stehen fruchtschädigend sowie erbgutverändernd zu sein.

Folglich besteht weiterhin ein Bedarf für Verfahren zur Herstellung von aliphatischen Polyurethan-Weichschaumstoffen, welche vorzugsweise ohne den Einsatz von metallorganischen Katalysatoren auskommen, so dass nur eine sehr geringe Menge beziehungsweise möglichst keine metallorganischen Katalysatoren sowohl bei der Herstellung eingesetzt werden müssen als auch in den hergestellten PolyurethanSchaumstoffen enthalten sind.

Die Aufgabe der vorliegenden Erfindung bestand darin, Polyurethan-Weichschaumstoffe auf Basis von aliphatischen oligomeren Polyisocyanaten bereitzustellen, die sich für den Einsatz in typischen Weichschaumanwendungen wie Polstern, Matratzen, Möbeln, Automobilsitzen und Motorradsitzen eignen. Dies gilt insbesondere für hochwertige flexible sowie Licht- und farbstabile Polyurethan-Weichschaumstoffe auf Basis von aliphatischen oligomeren Polyisocyanaten. Des Weiteren sollten im Besonderen bei der Herstellung der entsprechenden Polyurethan-Weichschaumstoffe möglichst keine beziehungsweise nur eine sehr geringe Menge an metallorganischen Katalysatoren eingesetzt werden. Ferner sollten bei der Herstellung dieser Weichschaumstoff auch Edukte auf $CO_2$-Basis und/oder auf Basis nachwachsender Rohstoffe eingesetzt werden können, um die Umwelt- sowie $CO_2$-Bilanz dieser Polyurethan-Weichschaumstoffe zu verbessern.

Diese Aufgaben wurden gelöst durch ein Verfahren zur Herstellung von aliphatischen Polyurethan-Weichschaumstoffen durch Umsetzung einer Zusammensetzung mit den Komponenten

A) mindestens eine monohydroxyfunktionelle Verbindung, mindestens ein Polyol sowie gegebenenfalls mindestens ein Kettenverlängerer und/oder ein Vernetzungsmittel;

B) mindestens ein aliphatisches oligomeres Polyisocyanat und gegebenenfalls ein monomeres aliphatisches Polyisocyanat und/oder dimeres aliphatisches Polyisocyanat;

C) mindestens ein chemisches und/oder physikalisches Treibmittel;

D) mindestens ein Gelkatalysator D1) und ein Treibkatalysator D2);

E) gegebenenfalls eine oberflächenaktive Verbindung und

F) gegebenenfalls von Komponente E) verschiedene Hilfs- und Zusatzstoffe

bei einer Isocyanat-Kennzahl von wenigstens 65, wobei die Umsetzung die folgenden zwei Schritte umfasst:

- In einem ersten Schritt wird das aliphatische oligomere Polyisocyanat der Komponente B) mit der monohydroxyfunktionellen Verbindung der Komponente A) umgesetzt und die dadurch erhaltene Edukt-Mischung wird mit einem Teil des Polyols der Komponente A) und gegebenenfalls dem monomeren aliphatischen Polyisocyanat und/oder dem dimeren aliphatischen Polyisocyanat der Komponente B) zu einer Präpolymer-Mischung aus NCO-funktionellen Präpolymer und überschüssiger Komponente B) umgesetzt, wobei die Präpolymer-Mischung einen Gehalt an freien NCO-Gruppen von ≥ 5,0 Gew.-%, bevorzugt von ≥ 5,0 Gew.-% bis ≤ 25,0 Gew.-% , weiter bevorzugt von ≥ 8,0 Gew.-% bis ≤ 20,0 Gew.-% aufweist, bezogen auf das Gesamtgewicht dieser Präpolymer-Mischung, bestimmt gemäß DIN EN ISO 11909:2007;
- In einem zweiten Schritt wird diese Präpolymer-Mischung mit dem restlichen Teil des Polyols der Komponente A), dem chemischen und/oder physikalischen Treibmittel der Komponente C), dem Gelkatalysator D1), dem Treibkatalysator D2), sowie gegebenenfalls dem Kettenverlängerer und/oder Vernetzungsmittel der Komponente A), gegebenenfalls der Komponenten E) und gegebenenfalls der Komponente F) zu dem aliphatischen Polyurethan-Weichschaumstoff umgesetzt.

Die Erfindung betrifft überdies Präpolymer-Mischung aus einem NCO-funktionellen Präpolymer und überschüssiger Komponente B), hergestellt oder erhältlich durch das erfindungsgemäße Verfahren, wobei die Mischung lagerstabil ist, wobei lagerstabil bedeutet, dass die Präpolymer-Mischung über einen Zeitraum von wenigstens 1 Monat, bevorzugt von wenigstens 2 Monaten, besonders bevorzugt von wenigstens 4 Monaten bei 25 °C ± 5 °C unter Stickstoffatmosphäre eine Viskositätsänderung (gemessen bei 45°) von höchstens 8000 mPa·s, bevorzugt von höchstens 5000 mPa·s, besonders bevorzugt von höchstens 3000 mPa·s aufweist, bestimmt mittels Viskosimetrie.

Des Weiteren betrifft die Erfindung einen aliphatischen Polyurethan-Weichschaumstoff, erhalten oder erhältlich durch das erfindungsgemäße Verfahren.

Außerdem betrifft die Erfindung die Verwendung des erfindungsgemäßen Polyurethan-Weichschaumstoffs als oder zur Herstellung von körperstützenden Elementen, insbesondere Polster, Matratzen, Möbeln, Schuheinlagen, Automobilarmauflagen, Automobilsitzen und Motorradsitzen.

Die Erfindung betrifft zudem die Verwendung einer monohydroxyfunktionellen Verbindung in Kombination mit einem aliphatischen oligomeren Polyisocyanat und gegebenenfalls einem aliphatischen monomeren Polyisocyanat zur Herstellung von einem aliphatischen Polyurethan-Weichschaumstoff, insbesondere nach dem erfindungsgemäßen Verfahren, wobei der aliphatische Polyurethan-Weichschaumstoff insbesondere weniger als 10,0 ppm, bevorzugt weniger als 5,0 ppm, besonders bevorzugt weniger als 3,0 ppm, ganz besonders bevorzugt weniger als 1,0 ppm an metallorganischen Katalysatoren, insbesondere an Dibutylzinndilaurat, Dibutylzinnoxid, Dimethylzinndineodecanoat, Dioctylzinndineodecanoat, Dimethylzinn(IV)dimercaptid oder Mischungen davon, enthält.

Überraschenderweise wurde gefunden, dass aliphatische oligomere Polyisocyanate, insbesondere solche vom Typ der Isocyanurate oder Iminooxadiazindione, in Kombination mit monohydroxyfunktionellen Verbindungen in einem Präpolymerverfahren zu aliphatischen Polyurethan-Weichschaumstoffen führen, welche die genannten Anforderungen erfüllen und auch ohne den Einsatz von metallorganischen Katalysatoren auskommen. Darüber hinaus weisen die erfindungsgemäßen Schäume eine verbesserte Stauchhärte (im 4. Zyklus, gemessen nach DIN EN ISO 3386-1), bevorzugt von ≤ 15,0 kPa sowie einen verbesserten DVR-Wert (gemessen nach DIN EN ISO 1856 -2008), bevorzugt von ≤ 6,0 % auf. Des Weiteren wird in einem ersten Schritt des Präpolymerverfahrens eine Präpolymer-Mischung aus einem NCO-funktionellen Präpolymer und überschüssiger Komponente B) erhalten, welche lagerstabil ist.

Unter einem Polyurethan-Weichschaumstoff wird typischerweise ein Schaumstoff verstanden, der im Bereich Polstern, Matratzen, Verpackung, Automobilanwendungen, Schuhwerk verwendet wird. Polyurethan-Weichschaumstoffe sind chemisch gesehen Polyadditionsprodukte aus Polyolen und üblicherweise Diisocyanaten, die in einer exothermen Reaktion, durch das meist chemisch hergestellte Treibmittel $CO_2$, welches aus der NCO-Wasserreaktion entsteht, hergestellt werden. Die Gel- (NCO-OH-Reaktion) und Treibreaktion (NCO-Wasserreaktion) können unter Mitverwendung von Katalysatoren, Stabilisatoren und sonstigen Hilfsstoffen modifiziert werden, so dass eine breite Palette unterschiedlicher Schaumstoffe entstehen. Die verwendeten Polyole sind vorzugsweise zu einem großen Anteil langkettige Polyole mit einer Funktionalität von 2 bis 3.

Im Rahmen dieser Erfindung werden unter metallorganischen Katalysatoren solche Verbindungen verstanden, in denen mindestens ein organischer Rest bzw. eine organische Verbindung direkt an ein Metall-Atom in Form einer Metall-Kohlenstoffverbindung (M-C) gebunden ist. Beispiele solcher metallorganischen Katalysatoren sind insbesondere Dibutylzinndilaurat, Dibutylzinnoxid, Dimethylzinndineodecanoat, Dioctylzinndineodecanoat und Dimethylzinn(IV)dimercaptid oder Mischungen davon. Im Gegensatz dazu werden unter anorganischen Katalysatoren anorganische Verbindungen, anorganische Salze sowie organische Salze verstanden. Beispiele solcher anorganischer Katalysatoren sind insbesondere Zinn(II)bis(2-ethylhexanoat), Zinn(II)bis(neodecanoat), Bismuth(III)tris(2-ethylhexanoat) und Bismuth(III)tris(neodecanoat). Diese anorganischen Katalysatoren werden im Rahmen dieser Erfindung vorzugsweise als Gelkatalysatoren D1) eingesetzt.

Unter lagerstabil wird verstanden, dass die Zusammensetzung über einen Zeitraum von wenigstens 1 Monat, bevorzugt von wenigstens 2 Monaten, besonders bevorzugt von wenigstens 4 Monaten bei 25 °C $\pm$ 5 °C unter Stickstoffatmosphäre eine Viskositätsänderung (gemessen bei 45°) von höchstens 8000 mPa·s, bevorzugt von höchstens 5000 mPa·s, besonders bevorzugt von höchstens 3000 mPa·s aufweist, bestimmt mittels Viskosimetrie.

**Komponente A):**

Die erfindungsgemäße Zusammensetzung enthält mindestens eine monohydroxyfunktionelle Verbindung, mindestens ein Polyol sowie gegebenenfalls mindestens ein Kettenverlängerer und/oder ein Vernetzungsmittel.

Komponente A1):

Als Komponente A1) werden vorzugsweise primäre, sekundäre und/oder tertiäre monohydroxyfunktionellen Verbindungen mit 1 bis 12 Kohlenstoffatomen, bevorzugt primäre monohydroxyfunktionelle Verbindungen, eingesetzt. Die Kohlenstoffketten können gesättigt oder ungesättigt, linear oder verzweigt, aliphatisch oder cycloaliphatisch oder aromatisch sein sowie Heteroatome wie Sauerstoff enthalten.

Dabei handelt es sich vorzugsweise um niedermolekulare monohydroxyfunktionelle Verbindungen (Alkohole) mit einem Molekulargewicht von 32,04 g/mol bis 186,34 g/mol, die neben der Hydroxy-Funktionalität (OH-Gruppe) bevorzugt keine weiteren Funktionalitäten (z.B. Ether- oder Ester-Funktionalitäten etc.) aufweisen. Insbesondere sind acyclische und/oder cyclische monohydroxyfunktionellen Alkanole und/oder acyclische und/oder cyclische monohydroxyfunktionellen Alkenole bevorzugt. Beispielhaft seien genannt Methanol, Ethanol, iso-Propanol, n-Propanol, iso-Butanol, n-Butanol, sec-Butanol, tert-Butanol, Pentan-1-ol, Pentan-2-ol, Pentan-3-ol, 2-Methyl-butan-1-ol, 2-Methyl-butan-2-ol, 3-Methyl-butan-1-ol, 3-Methyl-butan-2-ol, 2,2-Dimethyl-propan-1-ol, Hexan-1-ol, Hexan-2-ol, Hexan-3-ol, 2-Methylpentan-1-ol, 3-Methylpentan-1-ol, 4-Methylpentan-1-ol, 2-Methylpentan-2-ol, 3-Methylpentan-2-ol, 2,2-Dimethylbutan-1-ol, 2,3-Dimethylbutan-1-ol, 3,3-Dimethylbutan-1-ol, 2,3-Dimethylbutan-2-ol, 3,3-Dimethylbutan-2-ol, 2-Ethyl-1-butanol, 2-Methyl-3-butin-2-ol, 3-Butin-1-ol, Propagylalkohol, 1-tert-Butoxy-2-propanol, 1-Heptanol, 2-Heptanol, 3-Heptanol, 4-Heptanol, 1-Octanol, 2-Octanol, 3-Octanol, 4-Octanol, 1-Nonanol, 2-Nonanol, 3-Nonanol, 4-Nonanol, 5-Nonanol, 1-Decanol, 2-Decanol, 3-Decanol, 4-Decanol, 5-Decanol, 1-Undecanol, 2-Undecanol, 3-Undecanol, 4-Undecanol, 5-Undecanol, 6-Undecanol, 1-Dodecanol, 2-Dodecanol, 3-Dodecanol, 4-Dodecanol, 5-Dodecanol, 6-Dodecanol oder Mischungen von diesen. Weiterhin bevorzugt sind monohydroxyfunktionellen Verbindungen mit einem Schmelzpunkt von $\leq$ 60 °C, ganz besonders bevorzugt von $\leq$ 40 °C und am meisten bevorzugt $\leq$ 20°C. Insbesondere sind niedermolekulare primäre monohydroxyfunktionelle Verbindungen bevorzugt, da diese aufgrund der deutlich höheren Reaktivität schneller mit den Isocyanat-Gruppen reagieren.

Komponente A2):

Als Komponente A2) werden vorzugsweise polymere monohydroxyfunktionelle Verbindungen, bevorzugt Polyethermonoole, Polycarbonatmonoole, Polyestercarbonatmonoole, Polyethercarbonatmonoole, Polyetherestercarbonatmonoole und/oder Mischungen davon, eingesetzt, wobei die polymere monohydroxyfunktionelle Verbindung besonders bevorzugt eine primäre Hydroxylgruppe aufweist. Die polymere monohydroxyfunktionelle Verbindung A2) weist bevorzugt eine Hydroxylzahl von 20 bis 250 mg KOH/g auf, vorzugsweise 20 bis 112 mg KOH/g und besonders bevorzugt 20 bis 50 mg KOH/g, gemessen nach DIN 53240-3:2016-03.

Die Herstellung dieser Verbindungen kann durch katalytische Addition von einem oder mehreren Alkylenoxiden

an H-funktionelle Starterverbindungen, erfolgen. Als Alkylenoxide (Epoxide) können Alkylenoxide mit 2 bis 24 Kohlenstoffatomen eingesetzt werden. Bei den Alkylenoxiden mit 2 bis 24 Kohlenstoffatomen handelt es sich beispielsweise um eine oder mehrere Verbindungen ausgewählt aus der Gruppe, umfassend oder bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierten Fette als Mono-, Di- und Triglyceride, epoxidierte Fettsäuren, C1-C24-Ester von epoxidierten Fettsäuren, Epichlorhydrin, Glycidol, und Derivate des Glycidols, wie beispielsweise Methylglycidylether, Ethylglycidylether, 2-Ethylhexylglycidylether, Allylglycidylether, Glycidylmethacrylat sowie epoxidfunktionelle Alkyoxysilane, wie beispielsweise 3-Glycidyloxy¬propyl¬trimethoxysilan, 3-Glycidyioxy¬propyl¬triethoxysilan, 3-Glycidyloxypropyltripropoxysilan, 3-Glycidyloxy¬propyl-methyl-dimethoxysilan, 3-Glycidyl¬oxy¬propylethyldiethoxysilan, 3-Glycidyloxy-propyltrlisopropoxysilan. Vorzugsweise werden als Alkylenoxide Ethylenoxid und/oder Propylenoxid und/oder 1,2 Butylenoxid eingesetzt. Die Alkylenoxide können dem Reaktionsgemisch einzeln, im Gemisch oder nacheinander zugeführt werden. Es kann sich um statistische oder um Block-Copolymere handeln. Werden die Alkylenoxide nacheinander dosiert, so enthalten die hergestellten Produkte (Polyetherpolyole) Polyetherketten mit Blockstrukturen.

In einer bevorzugten Ausführungsform der Erfindung liegt der Anteil an Ethylenoxid an der insgesamt eingesetzten Menge an Propylenoxid und Ethylenoxid ≥ 0 und ≤ 90 Gew.-%, bevorzugt ≥ 0 und ≤ 60 Gew.-% Besonders bevorzugt sind Polyetherpolyole mit endständigen primären Hydroxylgruppen, da diese eine größere Reaktivität gegenüber Isocyanaten haben.

Die H-funktionellen Starterverbindungen sind für die Herstellung von Polyethermonoolen monofunktionell. Unter "H-funktionell" wird im Sinne der Erfindung eine Starterverbindung verstanden, die gegenüber Alkoxylierung aktive H-Atome aufweist. Als solche können Alkohole, Amine, Thiole und Carbonsäuren eingesetzt werden. Beispiele für bevorzugte monofunktionelle Alkohole sind Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-tert-Butoxy-2-propanol., 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin oder 4-Hydroxypyridin. Als monofunktionelle Amine kommen in Frage: Butylamin, tert-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure. Besonders gut als Starterverbindungen geeignet sind Verbindungen aus der Gruppe der Glycolether, wie z.B. Diethylenglycolmonoethylether. Bevorzugt handelt es sich bei den monofunktionellen Starterverbindungen um Diethylenglycolmonobutylether (Butyldiglycol).

Ferner ist es bevorzugt, dass der Stoffmengenanteil der OH-Gruppen der Summe der Komponenten A1) und A2) 25,0 bis 90,0 mol-%, weiter bevorzugt 35,0 bis 85,0 mol-%, besonders bevorzugt 40,0 bis 80,0 mol-% beträgt, bezogen auf die Gesamtstoffmenge der OH-Gruppen der Komponente A).

Komponente A3):

Die als Komponente A3) einsetzbaren Polyethercarbonatpolyole weisen eine Hydroxylzahl (OH-Zahl) gemäß DIN 53240-3:2016-03 von ≥ 20 mg KOH/g bis ≤ 600 mg KOH/g, vorzugsweise von ≥ 50 mg KOH/g bis ≤ 500 mg KOH/g, besonders bevorzugt von ≥ 50 mg KOH/g bis ≤ 300 mg KOH/g auf.

Zur Herstellung der Polyethercarbonatpolyole können die gleichen Alkylenoxide (Epoxide) und die gleichen H-funktionellen Startsubstanzen eingesetzt werden wie weiter unten auch zur Herstellung der Polyetherpolyole beschrieben wird (siehe Komponente A4).

Vorzugsweise erfolgt die Copolymerisation von Kohlendioxid und einem oder mehreren Alkylenoxiden in Gegenwart mindestens eines DMC-Katalysators (Doppelmetallcyanid-Katalysators).

Beispielsweise umfasst die Herstellung von Polyethercarbonatpolyolen folgende Schritte, indem:

(α) eine H-funktionelle Startersubstanz oder ein Gemisch aus mindestens zwei H-funktionellen Startersubstanzen vorgelegt und gegebenenfalls Wasser und/oder andere leicht flüchtige Verbindungen durch erhöhte Temperatur und/oder reduziertem Druck entfernt werden ("Trocknung"), wobei der DMC-Katalysator der H-funktionellen Startersubstanz oder dem Gemisch von mindestens zwei H-funktionellen Startersubstanzen vor oder nach der Trocknung zugesetzt wird,

(β) zur Aktivierung eine Teilmenge (bezogen auf die Gesamtmenge der bei der Aktivierung und Copolymerisation eingesetzten Menge an Alkylenoxiden) von einem oder mehreren Alkylenoxiden zu der aus Schritt (α) resultierenden Mischung zugesetzt wird, wobei diese Zugabe einer Teilmenge an Alkylenoxid gegebenenfalls in Gegenwart von $CO_2$ erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt (β) zur Aktivierung auch mehrfach erfolgen kann,

(γ) ein oder mehrere der Alkylenoxide und Kohlendioxid zu der aus Schritt (β) resultierenden Mischung zugesetzt werden, wobei die in Schritt (γ) eingesetzten Alkylenoxide gleich oder verschieden sein können von den bei Schritt (β) eingesetzten Alkylenoxiden, und wobei sich nach Schritt (γ) kein weiterer Alkoxylierungsschritt anschließt.

DMC-Katalysatoren sind im Prinzip aus dem Stand der Technik zur Homopolymerisation von Epoxiden bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO-A 97/40086, WO-A 98/16310 und WO-A 00/47649 beschrieben sind, besitzen eine sehr hohe Aktivität in der Homopolymerisation von Epoxiden und ermöglichen die Herstellung von Polyetherpolyolen und/oder Polyethercarbonatpolyolen bei sehr geringen Katalysatorkonzentrationen (25 ppm oder weniger). Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. t.-Butanol) noch einen Polyether mit einem zahlenmittlerem Molekulargewicht Mn größer als 500 g/mol enthalten.

Der DMC-Katalysator wird zumeist in einer Menge von ≤ 1 Gew. -%, vorzugsweise in einer Menge von ≤ 0,5 Gew. -%, besonders bevorzugt in einer Menge von ≤ 500 ppm und insbesondere in einer Menge von ≤ 300 ppm, jeweils bezogen auf das Gewicht des Polyethercarbonatpolyols eingesetzt.

In einer bevorzugten Ausführungsform der Erfindung weist das Polyethercarbonatpolyol der Komponente A3) einen Gehalt an Carbonatgruppen ("aus Kohlendioxid stammenden Einheiten"), berechnet als $CO_2$, von ≥ 2,0 und ≤ 30,0 Gew.-%, bevorzugt von ≥ 5,0 und ≤ 28,0 Gew.-% und besonders bevorzugt von ≥ 10,0 und ≤ 25,0 Gew -% auf.

Vorzugsweise weisen die erfindungsgemäß einzusetzenden Polyethercarbonatpolyole zwischen den Carbonatgruppen auch Ethergruppen auf, was in Formel (I) schematisch dargestellt wird. In dem Schema gemäß Formel (I) steht R' für einen organischen Rest wie z.B. einem Alkyl, Alkylaryl oder Aryl-Rest, der jeweils auch Heteroatome wie beispielsweise O, S, Si usw. enthalten kann. Die Indices e und f stehen für eine ganzzahlige Zahl. Das im Schema gemäß Formel (I) gezeigte Polyethercarbonatpolyol soll lediglich so verstanden werden, dass sich Blöcke mit der gezeigten Struktur im Polyethercarbonatpolyol prinzipiell wiederfinden können, die Reihenfolge, Anzahl und Länge der Blöcke aber variieren kann und nicht auf das in Formel (I) gezeigte Polyethercarbonatpolyol beschränkt ist. In Bezug auf Formel (I) bedeutet dies, dass das Verhältnis von e/f bevorzugt von 2 : 1 bis 1 : 20, besonders bevorzugt von 1,5 : 1 bis 1 : 10 beträgt.

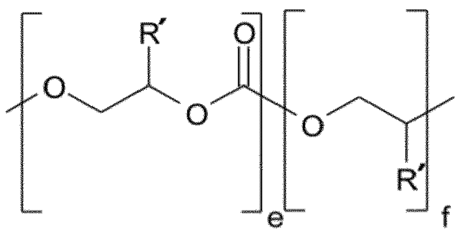

Formel (I)

Der Anteil an eingebautem $CO_2$ ("aus Kohlendioxid stammende Einheiten") in einem Polyethercarbonatpolyol lässt sich aus der Auswertung charakteristischer Signale im $^1$H-NMR-Spektrum bestimmen. Das nachfolgende Beispiel illustriert die Bestimmung des Anteils an aus Kohlendioxid stammenden Einheiten in einem auf 1,8-Octandiol gestarteten $CO_2$/Propylenoxid-Polyethercarbonatpolyol.

Der Anteil an eingebautem $CO_2$ in einem Polyethercarbonatpolyol sowie das Verhältnis von Propylencarbonat zu Polyethercarbonatpolyol kann mittels $^1$H-NMR (ein geeignetes Gerät ist von der Firma Bruker, DPX 400, 400 MHz; Pulsprogramm zg30, Wartezeit dl: 10s, 64 Scans) bestimmt werden. Die Probe wird jeweils in deuteriertem Chloroform gelöst. Die relevanten Resonanzen im $^1$H-NMR (bezogen auf TMS = 0 ppm) sind wie folgt:
Cyclisches Carbonat (welches als Nebenprodukt gebildet wurde) mit einer Resonanz bei 4,5 ppm; Carbonat, resultierend aus im Polyethercarbonatpolyol eingebautem Kohlendioxid mit Resonanzen bei 5,1 bis 4,8 ppm; nicht abreagiertes

Propylenoxid (PO) mit Resonanz bei 2,4 ppm; Polyetherpolyol (d.h. ohne eingebautes Kohlendioxid) mit Resonanzen bei 1,2 bis 1,0 ppm; das als Startermolekül (soweit vorhanden) eingebaute 1,8 Octandiol mit einer Resonanz bei 1,6 bis 1,52 ppm.

Der Gewichtsanteil (in Gew.-%) polymer-gebundenen Carbonats (LC') in der Reaktionsmischung wurde nach Formel (II) berechnet,

$$LC' = \frac{\left[F(5{,}1-4{,}8) - F(4{,}5)\right] * 102}{N} * 100\% \qquad \text{Formel (II)}$$

wobei sich der Wert für N ("Nenner" N) nach Formel (III) berechnet:

$$N = \left[F(5{,}1-4{,}8) - F(4{,}5)\right] * 102 + F(4{,}5) * 102 + F(2{,}4) * 58 + 0{,}33 * F(1{,}2-1{,}0) * 58 + 0{,}25 * F(1{,}6-1{,}52) * 146$$

Formel (III)

Dabei gelten folgende Abkürzungen:

F(4,5) = Fläche der Resonanz bei 4,5 ppm für cyclisches Carbonat (entspricht einem H Atom)
F(5,1-4,8) = Fläche der Resonanz bei 5,1-4,8 ppm für Polyethercarbonatpolyol und einem H-Atom für cyclisches Carbonat.
F(2,4) = Fläche der Resonanz bei 2,4 ppm für freies, nicht abreagiertes Propylenoxid
F(1,2-1,0) = Fläche der Resonanz bei 1,2-1,0 ppm für Polyetherpolyol
F(1,6-1,52) = Fläche der Resonanz bei 1,6 bis 1,52 ppm für 1,8-Octandiol (Starter), soweit vorhanden.

Der Faktor 102 resultiert aus der Summe der Molmassen von $CO_2$ (Molmasse 44 g/mol) und der von Propylenoxid (Molmasse 58 g/mol), der Faktor 58 resultiert aus der Molmasse von Propylenoxid und der Faktor 146 resultiert aus der Molmasse des eingesetzten Starters 1,8-Octandiol (soweit vorhanden).

Der Gewichtsanteil (in Gew.-%) an cyclischem Carbonat (CC') in der Reaktionsmischung wurde nach Formel (IV) berechnet,

$$CC' = \frac{F(4{,}5) * 102}{N} * 100\% \qquad \text{Formel (IV)}$$

wobei sich der Wert für N nach Formel (III) berechnet.

Um aus den Werten der Zusammensetzung der Reaktionsmischung die Zusammensetzung bezogen auf den Polymer-Anteil (bestehend aus Polyetherpolyol, welches aus Starter und Propylenoxid während der unter $CO_2$-freien Bedingungen stattfindenden Aktivierungsschritten aufgebaut wurde, und Polyethercarbonatpolyol, aufgebaut aus Starter, Propylenoxid und Kohlendioxid während den in Gegenwart von $CO_2$ stattfindenden Aktivierungsschritten und während der Copolymerisation) zu berechnen, wurden die Nicht-Polymer-Bestandteile der Reaktionsmischung (d.h. cyclisches Propylencarbonat sowie ggf. vorhandenes, nicht umgesetztes Propylenoxid) rechnerisch eliminiert. Der Gewichtsanteil der Carbonat-Wiederholungseinheiten im Polyethercarbonatpolyol wurde in einen Gewichtsanteil Kohlendioxid mittels des Faktors F = 44/(44+58) umgerechnet. Die Angabe des $CO_2$-Gehalts im Polyethercarbonatpolyol ist normiert auf den Anteil des Polyethercarbonatpolyol-Moleküls, das bei der Copolymerisation und ggf. den Aktivierungsschritten in Gegenwart von $CO_2$ gebildet wurde (d.h. der Anteil des Polyethercarbonatpolyol-Moleküls, der aus dem Starter (1,8-Octandiol, soweit vorhanden) sowie aus der Reaktion des Starters mit Epoxid resultiert, das unter $CO_2$-freien Bedingungen zugegeben wurde, wurde hierbei nicht berücksichtigt).

Zur Bestimmung des Anteils an eingebautem $CO_2$ in einem Polyethercarbonatpolyol kann wie zuvor hinsichtlich des Polyethercarbonatpolyol beschrieben vorgegangen werden, wobei das Startermolekül und damit einhergehend die obigen Gleichungen entsprechend anzupassen sind.

Polyethercarbonatpolyole sind beispielsweise unter dem Handelsnamen Cardyon® von der Covestro Deutschland AG kommerziell erhältlich.

Vorzugsweise umfasst das Polyol der Komponente A) wenigstens ein Polyethercarbonatpolyol A3).

Komponente A4):

Polyether-, Polyester- und/oder Polycarbonatpolyole können als Komponente A4) eingesetzt werden. Bevorzugt weist die Komponente A4) eine mittlere Funktionalität von > 1, besonders bevorzugt von ≥ 2 auf.

Als Polyetherpolyole geeignet sind solche mit einer Hydroxylzahl gemäß DIN 53240-3:2016-03 von ≥ 20 mg KOH/g bis ≤ 550 mg KOH/g, vorzugsweise von ≥ 20 bis ≤ 250 mg KOH/g und besonders bevorzugt ≥ 20 mg KOH/g bis ≤ 80 mg KOH/g. Die Herstellung dieser Verbindungen kann analog der Herstellung der oben unter Komponente A2 beschriebenen Polyethermonoole erfolgen. Als Alkylenoxide können die dort beschriebenen Alkylenoxide verwendet werden; es gelten die gleichen Vorzugsbereiche. Zur Herstellung der Polyetherpolyole werden jedoch H-funktionelle Startermoleküle mit einer durchschnittlichen Funktionalität von > 1 bis ≤ 6, bevorzugt von ≥ 1,5 und ≤ 6, besonders bevorzugt ≥ 2 und ≤ 4, ganz besonders bevorzugt ≥ 2 und ≤ 3, verwendet.

Als geeignete H-funktionelle Startsubstanz können Verbindungen mit für die Alkoxylierung aktiven H-Atomen eingesetzt werden. Für die Alkoxylierung aktive Gruppen mit aktiven H-Atomen sind beispielsweise -OH, $-NH_2$ (primäre Amine), -NH- (sekundäre Amine), -SH und $-CO_2H$, bevorzugt sind -OH und $-NH_2$, besonders bevorzugt ist -OH. Als H-funktionelle Startersubstanz wird beispielsweise eine oder mehrere Verbindungen ausgewählt aus der Gruppe, umfassend oder bestehend aus Wasser, mehrwertigen Alkoholen, mehrwertigen Aminen, mehrwertigen Thiolen, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine (z. B. sogenannte Jeffamine® kommerziell erhältlich von Huntsman, wie z. B. D-230, D-400, D-2000, T-403, T-3000, T-5000 oder entsprechende Produkte der BASF, wie z. B. Polyetheramin D230, D400, D200, T403, T5000), Polytetrahydrofurane (z. B. PolyTHF® der BASF, wie z. B. PolyTHF® 250, 650S, 1000, 1000S, 1400, 1800, 2000), Polytetrahydrofuranamine (BASF Produkt Polytetrahydrofuranamin 1700), Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und C1-C24 Alkyl-Fettsäureester, die im Mittel mindestens 2 OH-Gruppen pro Molekül enthalten, eingesetzt. Beispielhaft handelt es sich bei den C1-C24 Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als H-funktionelle Startersubstanzen geeignete mehrwertige Alkohole sind beispielsweise zweiwertige Alkohole (wie beispielsweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentandiol, Methylpentandiole (wie beispielweise 3-Methyl-1,5-pentandiol), 1,6-Hexandiol; 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielweise Trimethylolpropan, Glycerin, Trishydroxyethylisocyanurat, Rizinusöl); vierwertige Alkohole (wie beispielsweise Pentaerythrit); Polyalkohole (wie beispielweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvorgenannten Alkohole mit unterschiedlichen Mengen an ε-Caprolacton. In Mischungen von H-funktionellen Startern können auch dreiwertige Alkohole, wie beispielsweise Trimethylolpropan, Glycerin, Trishydroxyethylisocyanurat und Rizinusöl eingesetzt werden.

Die H-funktionellen Startersubstanzen können auch aus der Substanzklasse der Polyetherpolyole ausgewählt sein, insbesondere solchen mit einem zahlenmittleren Molekulargewicht Mn im Bereich von 100 bis 4000 g/mol, vorzugsweise 250 bis 2000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®- Baygal®-, PET®- und Polyether-Polyole der Covestro Deutschland AG (wie z. B. Desmophen® 3600Z, Desmophen® 1900U, Acclaim® Polyol 2200, Acclaim® Polyol 4000I, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

Die H-funktionellen Startersubstanzen können auch aus der Substanzklasse der Polyesterpolyole ausgewählt sein, insbesondere solchen mit einem zahlenmittleren Molekulargewicht Mn im Bereich von 200 bis 4500 g/mol, vorzugsweise 400 bis 2500 g/mol. Als Polyesterpolyole werden mindestens difunktionelle Polyester eingesetzt. Bevorzugt

bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophthalsäure, Tetrahydrophthalsäureanhydrid, Hexahydrophthalsäureanhydrid oder Gemische aus den genannten Säuren und/oder Anhydride eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Startersubstanzen zur Herstellung der Polyethercarbonatpolyole dienen können. Falls Polyetherpolyole zur Herstellung der Polyesteretherpolyole eingesetzt werden, sind Polyetherpolyole mit einem zahlenmittleren Molekulargewicht Mn von 150 bis 2000 g/mol bevorzugt.

Des Weiteren können als H-funktionelle Startersubstanzen Polycarbonatpolyole (wie beispielsweise Polycarbonatdiole) eingesetzt werden, insbesondere solche mit einem Molekulargewicht Mn im Bereich von 150 bis 4500 g/mol, vorzugsweise 500 bis 2500, die beispielsweise durch Umsetzung von Phosgen, Dimethylcarbonat, Diethylcarbonat oder Diphenylcarbonat und di- und/oder polyfunktionellen Alkoholen oder Polyesterpolyolen oder Polyetherpolyolen hergestellt werden. Beispiele zu Polycarbonatpolyolen finden sich z. B. in der EP-A 1359177. Beispielsweise können als Polycarbonatdiole die Desmophen® C-Typen der Covestro Deutschland AG verwendet werden, wie z. B. Desmophen® C 1100 oder Desmophen® C 2200.

Ebenfalls können Polyethercarbonatpolyole als H-funktionelle Startersubstanzen eingesetzt werden. Insbesondere werden Polyethercarbonatpolyole, die nach dem oben beschriebenen Verfahren hergestellt werden, eingesetzt. Diese als H-funktionelle Startersubstanzen eingesetzten Polyethercarbonatpolyole werden hierzu in einem separaten Reaktionsschritt zuvor hergestellt.

Bevorzugte H-funktionelle Startersubstanzen sind Alkohole der allgemeinen Formel (V),

HO-(CH2)x-OH Formel (V),

wobei x eine Zahl von 1 bis 20, bevorzugt eine gerade Zahl von 2 bis 20 ist. Beispiele für Alkohole gemäß Formel (V) sind Ethylenglycol, 1,4-Butandiol, 1,6-Hexandiol, 1,8-Octandiol, 1,10-Decandiol und 1,12-Dodecandiol. Weitere bevorzugte H-funktionelle Startersubstanzen sind Neopentylglykol, Trimethylolpropan, Glycerin, Pentaerythrit, Umsetzungsprodukte der Alkohole gemäß Formel (V) mit ε-Caprolacton, z.B. Umsetzungsprodukte von Trimethylolpropan mit ε-Caprolacton, Umsetzungsprodukte von Glycerin mit ε-Caprolacton, sowie Umsetzungsprodukte von Pentaerythrit mit ε-Caprolacton. Weiterhin bevorzugt werden als H-funktionelle Startsubstanzen Wasser, Diethylenglykol, Dipropylenglykol, Rizinusöl, Sorbit und Polyetherpolyole, aufgebaut aus sich wiederholenden Polyalkylenoxideinheiten, eingesetzt.

Besonders bevorzugt handelt es sich bei den H-funktionellen Startersubstanzen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, Diethylenglykol, Dipropylenglykol, Glycerin, Trimethylolpropan, di- und trifunktionelle Polyetherpolyole, wobei das Polyetherpolyol aus einer di- oder tri-H-funktionellen Startersubstanz und Propylenoxid bzw. einer di- oder tri-H-funktionellen Startersubstanz, Propylenoxid und Ethylenoxid aufgebaut ist. Die Polyetherpolyole haben bevorzugt ein zahlenmittleres Molekulargewicht Mn im Bereich von 62 bis 4500 g/mol und insbesondere ein zahlenmittleres Molekulargewicht Mn im Bereich von 62 bis 3000 g/mol, ganz besonders bevorzugt ein Molekulargewicht von 62 bis 1500 g/mol. Bevorzugt haben die Polyetherpolyole eine Funktionalität von $\geq 2$ bis $\leq 3$.

Als Alkylenoxide (Epoxide) können Alkylenoxide mit 2 bis 24 Kohlenstoffatomen eingesetzt werden. Bei den Alkylenoxiden mit 2 bis 24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, $C_1$-$C_{24}$-Ester von epoxidierten Fettsäuren, Epichlorhydrin, Glycidol, und Derivate des Glycidols, wie beispielsweise Methylglycidylether, Ethylglycidylether, 2-Ethylhexylglycidylether, Allylglycidylether, Glycidylmethacrylat sowie epoxidfunktionelle Alkyoxysilane, wie beispielsweise 3-Glycidyloxypropyltrimethoxysilan, 3-Glycidyloxypropyltriethoxysilan, 3-Glycidyloxypropyltripropoxysilan, 3-Glycidyloxypropyl-methyl-dimethoxysilan, 3-Glycidyloxypropylethyldiethoxysilan, 3-Glycidyloxypropyltrlisopropoxysilan. Vorzugsweise werden als Alkylenoxide Ethylenoxid und/oder Propylenoxid und/oder 1,2 Butylenoxid eingesetzt. Die Alkylenoxide können dem Reaktionsgemisch einzeln, im Gemisch oder nacheinander zugeführt werden. Es kann sich um statistische oder um Block-Copolymere handeln. Werden die Alkylenoxide nacheinander dosiert, so enthalten die hergestellten Produkte (Polyetherpolyole) Polyetherketten mit Blockstrukturen.

In einer bevorzugten Ausführungsform der Erfindung liegt der Anteil an Ethylenoxid an der insgesamt eingesetzten Menge an Propylenoxid und Ethylenoxid ≥ 0 und ≤ 90 Gew.-%, bevorzugt ≥ 0 und ≤ 60 Gew.-%. Vorzugsweise ist das Polyetherpolyol "EO-capped", d.h. das Polyetherpolyol besitzt terminale Ethylenoxidgruppen. Die dann endständigen primären Hydroxylgruppen haben eine größere Reaktivität gegenüber Isocyanaten. (G. Oertel, Polyurethane Handbook, 2nd Edition, page 194 and 219, (1993)).

Bei den ebenfalls als Komponente A4) einsetzbaren Polyesterpolyolen handelt es sich insbesondere um solche mit einem zahlenmittleren Molekulargewicht Mn im Bereich von 200 bis 4500 g/mol, vorzugsweise 400 bis 3500 g/mol, besonders bevorzugt von 800 bis 2500 g/mol. Als Polyesterpolyole werden bevorzugt mindestens difunktionelle Polyester eingesetzt. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophthalsäure, Tetrahydrophthalsäureanhydrid, Hexahydrophthalsäureanhydrid oder Gemische aus den genannten Säuren und/oder Anhydride eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Es ist auch möglich als Alkoholkomponente zweiwertige oder mehrwertige Polyetherpolyole einzusetzen. Falls Polyetherpolyole zur Herstellung der Polyesteretherpolyole eingesetzt werden, sind Polyetherpolyole mit einem zahlenmittleren Molekulargewicht Mn von 150 bis 2000 g/mol bevorzugt.

Als weitere Verbindungsklasse können Polycarbonatpolyole (wie beispielsweise Polycarbonatdiole) als Komponenet A4) eingesetzt werden, insbesondere solche mit einem Molekulargewicht Mn im Bereich von 150 bis 4500 g/mol, vorzugsweise 500 bis 2500, die beispielsweise durch Umsetzung von Phosgen, Dimethylcarbonat, Diethylcarbonat oder Diphenylcarbonat und di- und/oder polyfunktionellen Alkoholen oder Polyesterpolyolen oder Polyetherpolyolen hergestellt werden. Beispiele zu Polycarbonatpolyolen finden sich z. B. in der EP-A 1359177. Beispielsweise können als Polycarbonatdiole die Desmophen® C-Typen der Covestro Deutschland AG verwendet werden, wie z. B. Desmophen® C 1100 oder Desmophen® C 2200.

Die beschriebenen Verbindungen der Komponenten A3) und A4) können sowohl einzeln als auch in Mischungen als Polyol der Komponente A) eingesetzt werden.

Komponente A5):

Als Komponente A5) werden Kettenverlängerer (chain extender) und/oder Vernetzer bzw. Vernetzungsmittel (cross linker) eingesetzt. Die Kettenverlängerer und Vernetzer sind vorzugsweise NCO-reaktive Verbindungen mit einer OH- und/oder NH-Funktionalität von mindestens 2 und einem Molekulargewicht von 62 bis 800 g/mol. Dies können beispielsweise Ethylenglykol, Diethylenglykol, 1,2-Propandiol, 1,3-Propandiol, 1,4-Butandiol, 1,6-Hexandiol, Glycerin, 1,1,1-Trimethylolpropan, Pentaerythrit, Monoethanolamin, Diethanolamin und ähnliche niedermolekularen Verbindungen sowie Mischungen von diesen sein.

**Komponente B):**

Die Komponente B) enthält mindestens ein aliphatisches oligomeres Polyisocyanat und gegebenenfalls ein monomeres aliphatisches Polyisocyanat und/oder dimeres aliphatisches Polyisocyanat. Unter aliphatischen oligomeren Polyisocyanaten sollen im Rahmen der vorliegenden Erfindung Isocyanat-tragende Oligomere verstanden werden, die bevorzugt aus (2n+1) aliphatischen Polyisocyanaten gebildet sind, wobei n eine natürliche Zahl von 1 bis 10 ist. Dementsprechend werden sowohl symmetrische als auch asymmetrische Trimere, einschließlich deren höheren Homologe (wie Pentamere, Heptamere etc.) durch den Begriff "aliphatische oligomere Polyisocyanate" umfasst. Vorzugsweise besteht das aliphatische oligomere Polyisocyanat der Komponente B) zu wenigstens 90,0 Gew.-% aus diesen Isocyanat-tragenden Oligomeren. Die aliphatischen oligomeren Polyisocyanate enthalten dabei bevorzugt Isocyanurat-, Iminooxadiazindion. und/oder Biuret-Gruppen.

Bevorzugt werden als aliphatische oligomere Polyisocyanate der Komponente B) Isocyanat-tragende Trimere eingesetzt, wobei die Komponente B) insbesondere eine Mischung aus diesem Trimer und wenigstens einem weiteren Isocyanat-tragenden Oligomer, gebildet aus (2n+1) aliphatischen Polyisocyanaten, enthält, bei dem n eine natürliche Zahl von 2 bis 10 ist. Vorzugsweise besteht das aliphatische oligomere Polyisocyanat der Komponente B) zu wenigsten 30,0 Gew.-%, bevorzugt 30,0 bis 80,0 Gew.-% aus diesen Isocyanat-tragenden Trimeren. Besonders bevorzugt werden Isocyanat-tragende Trimere der Formel (VI) und/oder Formel (VII), jeweils gebildet aus 3 aliphatischen Polyisocyanaten, eingesetzt, wobei R unabhängig voneinander eine aliphatische C1 bis C15 Kohlenstoffkette ist.

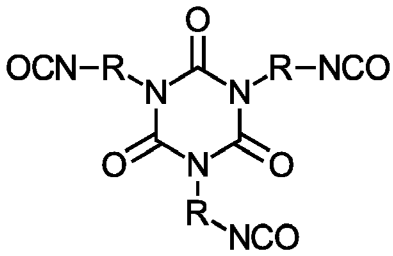

Formel (VI)

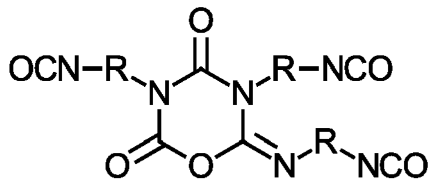

Formel (VII)

Die aliphatischen oligomeren Polyisocyanate sind allerdings nicht auf die vorgenannten Formen aus (2n+1) aliphatischen Polyisocyanaten beschränkt. So können beispielsweise auch Dimere sowie deren höheren Homologe unter die Definition der aliphatischen oligomeren Polyisocyanate fallen. Dementsprechend können die aliphatischen oligomeren Polyisocyanate auch Uretdion-, Carbodiimid-, Uretonimin-, Urethan-. Allophanat-, Biuret- sowie Harnstoff-Gruppen enthalten. Auch Mischformen, bei denen mehrere der oben genannten Strukturtypen in einem Oligomer auftreten, fallen unter die Definition.

Zur Herstellung der aliphatischen oligomeren Polyisocyanate können alle dem Fachmann bekannten niedermolekularen monomeren Diisocyanate eingesetzt werden. So sind monomere cyclo- oder linearaliphatische Di- und/oder Polyisocyanate als Ausgangsisocyanate geeignet, die einzeln oder in beliebigen Abmischungen eingesetzt werden können. Typische Beispiele sind 1,4-Diisocyanatobutan, 1,5-Diisocyanatopentan (PDI), 1,6-Diisocyanatohexan (HDI), 2-Methyl-1,5 diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 2,4'- und 4,4'-Diisocyanatodicyclohexylmethan, 1-Isocyanato-1-methyl-4(3)-isocyanatomethylcyclohexan (IMCI), Bis-(isocyanatomethyl)-norbornan, Triisocyanate und/oder höherfunktionelle Isocyanate wie z. B. 4-Isocyanatomethyl-1,8-octandiisocyanat (Nonantriisocyanat), 1,6,11-Undecantriisocyanat, 1,3,5-Tris(6-isocyanatopentyl)-1,3,5-triazinan-2,4,6-trion oder beliebige Gemische solcher Isocyanatverbindungen. Insbesondere werden die aliphatischen oligomeren Polyisocyanate aus einem Diisocyanat mit 1 bis 15 Kohlenstoffatomen hergestellt. Vorzugsweise ist das Diisocyanat ausgewählt aus 1,5-Pentamethylen-Diisocyanat und/oder 1,6-Hexamethylen-Diisocyanat. Geeignete kommerziell erhältliche Polyisocyanate sind unter anderem Desmodur® ultra N3300, Desmodur® ultra N3600, Desmodur® N3200, Desmodur® eco N7300 und Desmodur® N3900 (erhältlich bei der Covestro Deutschland AG)

Die Komponente B) weist vorzugsweise eine mittlere NCO-Funktionalität pro Molekül von $\geq 2{,}0$, bevorzugt von 2,3 bis 4,3, besonders bevorzugt von 2,5 bis 4,2, ganz besonders bevorzugt von 2,8 bis 4,1 und am meisten bevorzugt von 3,0 bis 4,0 auf. Die NCO-Funktionalität bezieht sich auf freie NCO-Gruppen und nicht auf latente NCO-Gruppen (wie beispielsweise die den Ring der Trimere bildenden NCO-Gruppen). Die mittlere NCO-Funktionalität der Komponente B wird, sofern nicht anders beschrieben, mittels Gelpermeationschromatographie (GPC) bestimmt. Die Funktionalität ist ein Ausdruck für die Zahl der reaktiven Gruppen pro Molekül, d.h. für die Zahl der potentiellen Verknüpfungsstellen bei der Ausbildung eines Netzwerks. Polyisocyanate, wie sie z.B. bei der Trimerisierung von Diisocyanaten gebildet werden, bestehen jedoch nicht nur aus einer definierten Molekülsorte, sondern enthalten eine breite Verteilung unterschiedlicher Moleküle mit unterschiedlichen Funktionalitäten. Als Bestimmungsgröße für die Polyisocyanate wird daher die mittlere Funktionalität angegeben. Die mittlere Funktionalität von Polyisocyanaten ist durch das Verhältnis von zahlenmittlerem Molekulargewicht und Äquivalentgewicht eindeutig bestimmt und wird im Allgemeinen aus der mit Hilfe der GPC ermittelten Molekulargewichtsverteilung berechnet. Demnach lässt sich die mittlere NCO-Funktionalität nach Zuordnung der einzelnen Oligomere in der GPC mit den jeweiligen Funktionalitäten und Gewichtung über deren Massenanteil berechnen. Für die nur isocyanuratgruppentragenden und iminooxadiazinediongruppentragenden Polyisocyanate (PIC) ist sie beispielsweise auch einfach über den NCO-Gehalt des Polyisocyanates nach folgender Formel berechenbar:

$$\text{NCO-Funktionalität}=(6*\text{NCO-Gehalt-PIC})/[4*\text{NCO-Gehalt-PIC} - \text{NCO-Gehalt-Monomer})]$$

Für andere isocyanatgruppentragende Polyisocyanate (Biurete, Uretdione) gilt, dass man die NCO-Funktionalität dann über die oben erwähnte Berechnung durchführen muss. Die Peaks in der GPC können, gegebenenfalls unter Zuhilfenahme weiterer Analyseverfahren wie NMR, IR und/oder MS, bestimmten Strukturen zugeschrieben werden. Mit den NCO-Funktionalitäten der ermittelten chemischen Strukturen und einer Gewichtung über deren Massenanteil kann in der GPC dann die mittlere NCO-Funktionalität des Gemisches der Polyisocyanate errechnet werden. Da bei der Oligomerisierung von Di- und Polyisocyanaten in der Regel keine reinen Produkte, sondern Verbindungen mit

unterschiedlichen Oligomerisierungsgraden, d.h. Oligomerenmischungen entstehen, lässt sich die NCO-Funktionalität der entstandenen Verbindungen lediglich als Durchschnittswert und der Gehalt an NCO-Gruppen nur in Bezug auf das Gesamtgewicht der entstandenen Oligomerenmischung angeben. Eine solche Oligomerenmischung wird im Rahmen der vorliegenden Erfindung vereinfacht als ein "aliphatisches oligomeres Polyisocyanat" bezeichnet.

Des Weiteren ist es bevorzugt, wenn die Komponente B) einen Gehalt an freien NCO-Gruppen von 5,0 bis 30,0 Gew.-%, besonders bevorzugt von 10,0 bis 27,0 Gew.-% und ganz besonders bevorzugt von 15,0 bis 24,0 Gew.-%, bezogen auf das Gesamtgewicht der Komponente B), aufweist, bestimmt gemäß DIN EN ISO 11909:2007.

In einer Ausführungsform des erfindungsgemäßen Verfahrens erfolgt die Umsetzung bei einer Isocyanat-Kennzahl von 65 bis 120, bevorzugt von 70 bis 110, weiter bevorzugt von 75 bis 110, ganz besonders bevorzugt von 80 bis 110. Unter der Isocyanat-Kennzahl (auch Kennzahl, NCO/OH-Index oder Isocyanat-Index genannt) wird der Quotient aus der tatsächlich eingesetzten Stoffmenge [mol] an Isocyanat-Gruppen und der tatsächlich eingesetzten Stoffmenge [mol] an Isocyanat-reaktiven Gruppen, multipliziert mit 100, verstanden. Mit anderen Worten gibt die Kennzahl das prozentuale Verhältnis der tatsächlich eingesetzten Isocyanat-Menge zur stöchiometrischen, d.h. für die Umsetzung der OH-Äquivalente berechnete Isocyanat-Menge an. Eine äquivalente Menge an NCO-Gruppen und NCO-reaktiven H-Atomen entspricht dabei einem NCO/OH-Index von 100.

$$\text{Kennzahl} = [(\text{mol Isocyanat-Gruppen}) / (\text{mol Isocyanat-reaktive Gruppen})] * 100$$

Des Weiteren kann gegebenenfalls zusätzlich zu dem mindestens einen aliphatischen oligomeren Polyisocyanat ein monomeres aliphatisches Polyisocyanat in der Komponente B) eingesetzt werden. Vorzugsweise ist das monomere aliphatische Polyisocyanat ausgewählt aus der Gruppe, umfassend oder bestehend aus 1,5-Pentamethylen-Diisocyanat, 1,6-Hexamethylen-Diisocyanat, 1-Isocyanato-3-isocyanato-methyl-3,5,5-trimethylcyclohexan, Dicyclohexylmethan-4,4'-diisocyanat.

Des Weiteren kann alternativ oder zusätzlich zu den monomeren aliphatischen Polyisocyanaten auch ein dimeres aliphatisches Polyisocyanate in der Komponente B) eingesetzt werden. Dieses dimere aliphatische Polyisocyanate ist vorzugsweise aus dimeren Verbindungen von 1,5-Pentamethylen-Diisocyanat, 1,6-Hexamethylen-Diisocyanat, 1-Isocyanato-3-isocyanato-methyl-3,5,5-trimethylcyclohexan, Dicyclohexylmethan-4,4'-diisocyanate oder gemischten Dimeren davon ausgewählt. Vorzugsweise sind die dimeren aliphatischen Polyisocyanate die entsprechenden Uretdione der vorgenannten Verbindungen, wobei 1,3-Bis(5-isocyanatopentyl)-uretdion, 1,3-Bis(6-isocyanatohexyl)-uretdion oder Mischungen davon besonders bevorzugt sind. Die Uretdione sind insbesondere als Alternative oder Ergänzung für die monomeren aliphatischen Polyisocyanat geeignet, da diese bei erhöhten Temperaturen, wie sie beispielsweise bei der Verschäumung entstehen oder vorherrschen können, wieder nahezu vollständig als Monomere vorliegen.

**Komponente C):**

Als Komponente C werden Treibmittel eingesetzt. Dies umfasst chemische und/oder physikalische Treibmittel.

Als physikalische Treibmittel werden beispielsweise Kohlendioxid und/oder leicht flüchtige organische Substanzen verwendet. Bei diesen leicht flüchtigen physikalischen Treibmitteln handelt es sich um cyclische Kohlenwasserstoffe wie beispielsweise Cyclopentan und Cyclohexan. Nicht cyclische Kohlenwasserstoffe sind u.a. Butan, n-Pentan und Isopentan. Darüber hinaus eignen sich die halogenhaltigen Kohlenwasserstoffe als physikalische Treibmittel. Diese sind Fluorkohlenwasserstoffe oder Perfluorverbindungen z. B. Perfluoralkane.

Als chemische Treibkatalysatoren werden bevorzugt Wasser, wässrige Natriumcarbonat-Lösungen oder Mischungen davon eingesetzt. Vorzugsweise wird Wasser als Komponente C) eingesetzt.

**Komponente D):**

Als Komponente D) werden mindestens ein Gelkatalysator D1) und ein Treibkatalysator D2) eingesetzt. Der Gelkatalysator D1) ist vorzugsweise ein anorganischer Katalysator, wobei darunter anorganische Verbindungen, anorganische Salze sowie organische Salze verstanden werden. In einer bevorzugten Ausführungsform ist der Gelkatalysator D1) ausgewählt aus der Gruppe, umfassend oder bestehend aus anorganischen Katalysatoren wie Zinn(II)bis(2-ethylhexanoat), Zinn(II)bis(neodecanoat), Bismuth(III)tris(2-ethylhexanoat), Bismuth(III)tris(neodecanoat) oder Mischungen davon. Der Treibkatalysator D2) ist vorzugsweise ausgewählt aus der Gruppe, umfassend oder bestehend aus Bis[2-(N,N-dimethylamino)ethyl]ether, 1,8-Diazabicyclo[5.4.0]undec-7-en, 1,1,3,3-Tetramethylguanidin oder Mischungen davon.

Die Katalysatoren können einzeln wie auch in Abmischung miteinander zugegeben werden. Die Katalysatoren können dabei als Gel- und/oder Treibkatalysatoren fungieren. Viele Katalysatoren sind keine reinen Gel- oder Treibkatalysatoren, sondern können für beide Zwecke eingesetzt werden. Einer der beiden Eigenschaften kann jedoch stärker ausgeprägt sein. Dabei gelten die Verbindungen Zinnoctoat oder -neodecanoat als nahezu reine Gelkatalysatoren und Bis[2-(N,N-dimethylamino)ethyl]ether als ein reiner Treibkatalysator. Bei aliphatischen Isocyanaten wirkt 1,8-Diazabicyclo[5.4.0]undec-7-en (DBU) vorwiegend als Treibkatalysator.

**Komponente E):**

Des Weiteren können oberflächenaktive Zusatzstoffe, insbesondere Silikontensiden und stärker bevorzugt Siloxan-Polyoxyalkylen-Copolymeren und Polydimethylsiloxan-Polyoxyalkylen-Copolymeren bei der Herstellung der Schaumstoffe eingesetzt werden. Andere oberflächenaktive Zusatzstoffe, wie z.B. Emulgatoren können ebenfalls enthalten sein. Bei den Schaumstabilisatoren sind insbesondere solche mit niedriger Emission wie beispielsweise Produkte der Tegostab® BF-Serie (Firma: Evonik Operations GmbH) geeignet.

**Komponente F):**

Optionale von Komponente E) verschiedene Hilfs- und Zusatzstoffe wie Reaktionsverzögerer (beispielsweise sauer reagierende Stoffe wie Salzsäure oder organische Säurehalogenide), Zellregler (beispielsweise Paraffine oder Fettalkohole oder Dimethylpolysiloxane), Pigmente, Farbstoffe, Flammschutzmittel, (beispielsweise Trikresylphosphat oder Ammoniumpolyphosphat), weitere Stabilisatoren gegen Alterungs- und Witterungseinflüsse, Antioxidantien, Weichmacher, fungistatisch und bakteriostatisch wirkende Substanzen, Füllstoffe (wie beispielsweise Bariumsulfat, Kieselgur, Ruß- oder Schlämmkreide) und Trennmittel können ebenfalls als Komponente F) eingesetzt werden. Diese gegebenenfalls mitzuverwendenden Hilfs- und Zusatzstoffe werden beispielsweise in der EP-A 0 000 389, Seiten 18 - 21, beschrieben. Weitere Beispiele von gegebenenfalls erfindungsgemäß mitzuverwendenden Hilfs- und Zusatzstoffen sowie Einzelheiten über Verwendungs- und Wirkungsweise dieser Hilfs- und Zusatzstoffe sind im Kunststoff-Handbuch, Band VII, herausgegeben von G. Oertel, Carl-Hanser-Verlag, München, 3. Auflage, 1993, z.B. auf den Seiten 104-127 beschrieben.

**Metallorganische Katalysatoren:**

Es ist bevorzugt, dass der Gesamtgehalt an metallorganischen Katalysatoren der vorgenannten Definition, insbesondere an Dibutylzinndilaurat, Dibutylzinnoxid, Dimethylzinndineodecanoat, Dioctylzinndineodecanoat und Dimethylzinn(IV)dimercaptid, in der Zusammensetzung weniger als 10,0 ppm, bevorzugt weniger als 5,0 ppm, besonders bevorzugt weniger als 3,0 ppm, ganz besonders bevorzugt weniger als 1,0 ppm, beträgt.
In einer bevorzugten Ausführungsform umfasst die Zusammensetzung keine metallorganischen Katalysatoren, insbesondere Dibutylzinndilaurat, Dibutylzinnoxid, Dimethylzinndineodecanoat, Dioctylzinndineodecanoat und Dimethylzinn(IV)dimercaptid.

**Aliphatische Polyurethan-Weichschaumstoffe auf Basis nachwachsender (biobasierter) bzw. nachhaltiger Rohstoffe:**

Die im erfindungsgemäßen Verfahren einzusetzenden Komponenten können biobasiert oder nicht-biobasiert sein. Allerdings ist es im Rahmen einer umweltfreundlichen Ausrichtung von Produktionsprozessen generell wünschenswert, Ausgangsstoffe auf Basis nachwachsender (biobasierter) bzw. nachhaltiger Rohstoffe einzusetzen.
Der Begriff "biobasiert" wird im Rahmen der vorliegenden Erfindung dahingehend definiert, dass eine Komponente, eine Verbindung, ein Material oder ähnliches - wie beispielsweise aliphatische oligomere Polyisocyanate gemäß Komponente B) oder ein Ausgangsstoff zur Herstellung eines solchen aliphatischen oligomeren Polyisocyanats - aus erneuerbaren Quellen (wie beispielsweise aus Pflanzen, Mikroben, Algen oder Tieren) erhalten wurde oder daraus präpariert wurde. Demgegenüber stehen Verbindungen und Materialien, die aus nicht-erneuerbaren Quellen erhalten oder präpariert wurden. Nicht-erneuerbare Quellen umfassen z.B. fossile Rohstoffe, die in geologischer Vorzeit aus toten Lebewesen entstanden sind. Dies sind insbesondere Erdöl, Braunkohle, Steinkohle, Torf und Erdgas. Verbindungen und Materialien, die aus nicht-erneuerbaren Quellen erhalten oder präpariert wurden, werden im Rahmen der vorliegenden Erfindung als nicht-biobasiert oder "künstlich hergestellt" definiert. Biobasierte Ausgangsstoffe können unmittelbar aus den oben genannten erneuerbaren Quellen gewonnen werden oder durch Folgereaktionen aus Verbindungen oder Materialien, die aus diesen Quellen erhalten wurden, hergestellt werden. So können die aliphatischen oligomeren Polyisocyanate der Komponete B) auf Di- und Polyisocyanaten basieren, die wiederum aus biobasierten Diaminen hergestellt wurden. Ein Beispiel für ein solches Diamin stellt 1,5-Diaminopentan (1,5-PDA) dar.
Insbesondere ist es ebenfalls generell wünschenswert, $CO_2$-basierte Ausgangsstoffe in relativ großen Mengen

einzusetzen. Bei den unter A3) beschriebenen Polyethercarbonatpolyolen handelt es sich um solche Ausgangsstoffe. Bei Verwendung dieser Verbindungen kann die $CO_2$-Bilanz der erfindungsgemäßen Polyurethan-Weichschäume deutlich verbessert werden.

Auch bei Verwendung von Polyesterpolyolen (A4) als Polyolkomponenten können Polyurethanweichschäume hergestellt werden (WO 2014/064130). Durch Austausch der in WO 2014/064130 verwendeten aromatischen Isocyanate durch auf Basis nachwachsender Rohstoffe wie dem hier verwendetem 1,3,5-Tris(6-isocyanatopentyl)-1,3,5-triazinan-2,4,6-trion (B1) und zusätzlich biobasierten niedermolekularen Alkoholen, wie beispielsweise Bioethanol, können Polyurethan-Weichschaumstoffe mit eine Anteil nachwachsender Rohstoffe von ≥ 65 %, bevorzugt ≥ 75 % und besonders bevorzugt von größer ≥ 80% hergestellt werden. Überraschend wurde auch gefunden, dass bei Verwendung von 1,3,5-Tris(6-isocyanatopentyl)-1,3,5-triazinane-2,4,6-trione (B1) und Biopolyesterpolyolen (A4), hergestellt aus Biobernsteinsäure und Diethylenglycol mit einer OH-Zahl von 63,2, einer Estergruppenkonzentration von bis zu 10,1 mol/kg zu Schäumen verarbeitet werden konnten, die bei Verwendung von Toluylendiisocyanat-Abmischungen aus Toluylendiisocyanat mit einem Anteil von ca. 80 Gew.-% 2,4-Toluylendiisocyanat und ca. 20 Gew.-% 2,6-Toluylendiisocyanat und Toluylendiisocanant mit einem Anteil von ca. 65 Gew.-% 2,4-Toluylendiisocyanat und ca. 35 Gew.-% 2,6-Toluylendiisocyanat (C2) nicht hergestellt werden konnten, wie diese in WO 2014/064130 A1 beschrieben sind .

## Umsetzung:

Die Umsetzung der Komponenten wird bei einer Isocyanat-Kennzahl von wenigstens 65, bevorzugt 65 bis 120, weiter bevorzugt von 70 bis 110, besonders bevorzugt von 75 bis 110, ganz besonders bevorzugt von 80 bis 110 durchgeführt.

Des Weiteren erfolgt die Umsetzung der Komponenten in einem so genannten Präpoylmerverfahren, welches zwei Schritte umfasst. In einem ersten Schritt wird das aliphatische oligomere Polyisocyanat der Komponente B) mit der monohydroxyfunktionellen Verbindung der Komponente A) umgesetzt und die dadurch erhaltene Edukt-Mischung wird mit einem Teil des Polyols der Komponente A) und gegebenenfalls dem monomeren aliphatischen Polyisocyanat und/oder dem dimeren aliphatischen Polyisocyanat der Komponente B) zu einer Präpolymer-Mischung aus NCO-funktionellen Präpolymer und überschüssiger Komponente B) umgesetzt, wobei die Präpolymer-Mischung einen Gehalt an freien NCO-Gruppen von ≥ 5,0 Gew.-%, bevorzugt von ≥ 5,0 Gew.-% bis ≤ 25,0 Gew.-% , weiter bevorzugt von ≥ 8,0 Gew.-% bis ≤ 20,0 Gew.-% aufweist, bezogen auf das Gesamtgewicht dieser Präpolymer-Mischung, bestimmt gemäß DIN EN ISO 11909:2007. In einem zweiten Schritt wird diese Präpolymer-Mischung mit dem restlichen Teil des Polyols der Komponente A), dem chemischen und/oder physikalischen Treibmittel der Komponente C), dem Gelkatalysator D1), dem Treibkatalysator D2), sowie gegebenenfalls dem Kettenverlängerer und/oder Vernetzungsmittel der Komponente A), gegebenenfalls der Komponenten E) und gegebenenfalls der Komponente F) zu dem aliphatischen Polyurethan-Weichschaumstoff umgesetzt.

Vorzugsweise bedeutet ein Teil des Polyols der Komponente A) im ersten Schritt, dass 20,0 bis 80,0 Gew.-%, bevorzugt 30,0 bis 70,0 Gew.-%, besonders bevorzugt 50,0 bis 65,0 Gew.-% der gesamten Menge des Polyols der Komponente A) eingesetzt wird.

Ferner ist es bevorzugt, dass in dem ersten Schritt die Umsetzung bei einer Temperatur von 20 bis 50 °C durchgeführt wird, bevorzugt bei 25 bis 45 °C.

Vorzugsweise weist in dem zweiten Schritt die Präpolymer-Mischung aus NCO-funktionellem Präpolymer und überschüssiger Komponente B) eine Temperatur von 25 bis 60 °C auf, bevorzugt von 40 bis 50 °C.

## Präpolymer-Mischung:

In dem erfindungsgemäßen Verfahren entsteht in dem ersten Schritt des Präpolymerverfahrens eine Präpolymer-Mischung aus einem NCO-funktionellen Präpolymer und überschüssiger Komponente B). Diese Präpolymer-Mischung ist vorzugsweise lagerstabil, wobei lagerstabil bedeutet, dass die Präpolymer-Mischung über einen Zeitraum von wenigstens 1 Monat, bevorzugt von wenigstens 2 Monaten, besonders bevorzugt von wenigstens 4 Monaten bei 25 °C ± 5 °C eine Viskositätsänderung (gemessen bei 45°) von höchstens 8000 mPa·s, bevorzugt von höchstens 5000 mPa·s, besonders bevorzugt von höchstens 3000 mPa·s aufweist, bestimmt mittels Viskosimetrie. Dies bedeutet, dass diese Präpolymer-Mischung auch vor der weiteren Umsetzung gelagert werden kann.

Es werden unterschiedlich zusammengesetzte Präpolymer-Mischungen hergestellt. Dazu wird zunächst das aliphatische oligomere Polyisocyanat mit den monohydroxyfunktionellen Verbindungen (beispielsweise niedermolekulare Alkohole, wie Ethanol etc.) versetzt, wobei eine Edukt-Mischung erhalten wird. Nach erfolgter Reaktion wird diese Edukt-Mischung mit einem Teil des Polyols (Polyether-, Polyester-Polycarbonatpolyole) und ggf. dem monomeren aliphatischen Polyisocyanat (PDI, HDI, IPDI) und/oder dem dimeren aliphatischen Polyisocyanat zu einer Präpolymer-Mischung aus NCO-funktionellen Präpolymer und überschüssiger Komponente B) umgesetzt. Diese Präpolymer-Mischungen können dann bei 25 °C gelagert, die erfolgte Reaktion wird durch FT-IR-Spektren und Messung des NCO-Gehaltes verifiziert. Die Präpolymere können danach zur Herstellung von Polyurethan-Weichschaumstoffen eingesetzt und konventionell verschäumt werden. Um die Verarbeitbarkeit zu verbessern, d.h. die Reaktivität zu erhöhen und die Viskosität abzusenken, werden die Präpolymer-Mischungen vor der Verschäumung auf 45 °C vorgeheizt.

Der Dampfdruck eines Gemisches ergibt sich nach dem Raoult'sehen Gesetz:

$$P = \sum p_{monomere\ aliphatische\ Polyisocyanate} + P_{oligomere\ aliphatische\ Polyisocyanate} + P_{Polyol}$$

$$P = \sum p_{Polyisocyanate} + P_{Polyol}$$

der Reindampfdruck des monomeren Diisocyanates ergibt sich, wie hier am Beispiel des PDI aus dem Produkt des Stoffmengenanteils $x_{PDI}$ und des Aktivitätskoeffizienten $\gamma_{PDI}$ und dem Gleichgewichtsdampfdrucks $p_{PDI}^{LV}$ (LV für liquid-vapor) $p_{PDI} = x_{PDI} \cdot \gamma_{PDI} \cdot p_{PDI}^{LV}$

Der Aktivitätskoeffizient und Reindampfdruck sind Funktionen der Temperatur. Der Aktivitätskoeffizient ist zudem eine Funktion von Konzentration und abhängig von den eingesetzten Stoffen, d.h. er hat in einem Gemisch aus Polyolen einen anderen Wert als in Wasser bei gleicher Konzentration und Temperatur. So sind die Aktivitätskoeffizienten von PDI und HDI immer kleiner 1. Der reale Dampfdruck eines ternären Gemisches aus Polyisocyanat, PDI und Polyolen ist immer kleiner als in der idealen Mischung. Somit können auch nicht aufgereinigte Präpolymere mit einem höheren Gehalt an monomeren Diisocyanaten bei Einsatz geeigneter Absaugeinrichtungen verarbeitet werden.

Der Aktiviätskoeffizient von PDI ist immer kleiner 1. Der Dampfdruck im ternären Gemisch ist kleiner als in der idealen Mischung.

**Schaumherstellung:**

Die aliphatischen Polyurethan-Schaumstoffe liegen als aliphatische Polyurethan-Weichschaumstoffe vor und können als Form- oder auch als Blockschaumstoffe hergestellt werden. Gegenstand der Erfindung ist daher ein Verfahren zur Herstellung der - optional anteilig biobasierten - aliphatischen Polyurethan-Weichschaumstoffe.

Die nach der Erfindung erhältlichen - gegebenenfalls anteilig biobasierten - verfärbungsbeständigen Polyurethan-Weichschaumstoffe finden beispielsweise folgende Anwendung: Textilschäume (beispielsweise in BHs, Schulterposter, Möbelpolsterungen, Textileinlagen), körperstützende Elemente (beispielsweise in Polstern, Matratzen, Möbeln, Automobilsitzen, Motorradsitzen, Kopfstützen, Armlehnen), Schwämme sowie Schaumstofffolien zur Verwendung in Automobilteilen (wie beispielsweise in Dachhimmeln, Türseitenverkleidungen und Sitzauflagen).

Die durch das erfindungsgemäße Verfahren erhaltenen oder erhältlichen Polyurethan-Weichschaumstoffe weisen insbesondere eine Stauchhärte (im 4. Zyklus) von ≤ 15,0 kPa, bevorzugt von ≤ 14,0 kPa und besonders bevorzugt von 4,0 bis 12,0 kPa, gemessen nach DIN EN ISO 3386-1 und/oder einen Druckverformungsrest-Wert (DVR) von ≤ 6,0 %, bevorzugt von ≤ 5,0 %, weiter bevorzugt von ≤ 4,0 % und besonders bevorzugt von 0,1 % bis 4,0 %, gemessen nach DIN EN ISO 1856-2008 auf.

Außerdem ist Gegenstand der Erfindung die Verwendung einer monohydroxyfunktionellen Verbindung in Kombination mit einem aliphatischen oligomeren Polyisocyanat und gegebenenfalls einem aliphatischen monomeren Polyisocyanat zur Herstellung von einem aliphatischen Polyurethan-Weichschaumstoff, insbesondere nach dem erfindungsgemäßen Verfahren, wobei der aliphatische Polyurethan-Weichschaumstoff insbesondere weniger als 10,0 ppm, bevorzugt weniger als 5,0 ppm, besonders bevorzugt weniger als 3,0 ppm, ganz besonders bevorzugt weniger als 1,0 ppm an metallorganischen Katalysatoren, insbesondere an Dibutylzinndilaurat, Dibutylzinnoxid, Dimethylzinndineodecanoat, Dioctylzinndineodecanoat, Dimethylzinn(IV)dimercaptid oder Mischungen davon, enthält.

**Ausführungsformen:**

Die vorliegende Erfindung betrifft insbesondere die folgenden Ausführungsformen:
Nach einer ersten Ausführungsform betrifft die Erfindung ein Verfahren zur Herstellung von aliphatischen Polyurethan-Weichschaumstoffen durch Umsetzung einer Zusammensetzung mit den Komponenten

A) mindestens eine monohydroxyfunktionelle Verbindung, mindestens ein Polyol sowie gegebenenfalls mindestens ein Kettenverlängerer und/oder ein Vernetzungsmittel;

B) mindestens ein aliphatisches oligomeres Polyisocyanat und gegebenenfalls ein monomeres aliphatisches Polyisocyanat und/oder dimeres aliphatisches Polyisocyanat;

C) mindestens ein chemisches und/oder physikalisches Treibmittel;

D) mindestens ein Gelkatalysator D1) und ein Treibkatalysator D2);

E) gegebenenfalls eine oberflächenaktive Verbindung und

F) gegebenenfalls von Komponente E) verschiedene Hilfs- und Zusatzstoffe

bei einer Isocyanat-Kennzahl von wenigstens 65, wobei die Umsetzung die folgenden zwei Schritte umfasst:

- In einem ersten Schritt wird das aliphatische oligomere Polyisocyanat der Komponente B) mit der monohydroxyfunktionellen Verbindung der Komponente A) umgesetzt und die dadurch erhaltene Edukt-Mischung wird mit einem Teil des Polyols der Komponente A) und gegebenenfalls dem monomeren aliphatischen Polyisocyanat und/oder dem dimeren aliphatischen Polyisocyanat der Komponente B) zu einer Präpolymer-Mischung aus NCO-funktionellen Präpolymer und überschüssiger Komponente B) umgesetzt, wobei die Präpolymer-Mischung einen Gehalt an freien NCO-Gruppen von $\geq$ 5,0 Gew.-%, bevorzugt von $\geq$ 5,0 Gew.-% bis $\leq$ 25,0 Gew.-% , weiter bevorzugt von $\geq$ 8,0 Gew.-% bis $\leq$ 20,0 Gew.-% aufweist, bezogen auf das Gesamtgewicht dieser Präpolymer-Mischung, bestimmt gemäß DIN EN ISO 11909:2007;
- In einem zweiten Schritt wird diese Präpolymer-Mischung mit dem restlichen Teil des Polyols der Komponente A), dem chemischen und/oder physikalischen Treibmittel der Komponente C), dem Gelkatalysator D1), dem Treibkatalysator D2), sowie gegebenenfalls dem Kettenverlängerer und/oder Vernetzungsmittel der Komponente A), gegebenenfalls der Komponenten E) und gegebenenfalls der Komponente F) zu dem aliphatischen Polyurethan-Weichschaumstoff umgesetzt.

Nach einer zweiten Ausführungsform betrifft die Erfindung ein Verfahren nach Ausführungsform 1, dadurch gekennzeichnet, dass die monohydroxyfunktionelle Verbindung der Komponente A) ausgewählt ist aus der Gruppe, umfassend oder bestehend aus

A1) primären, sekundären und/oder tertiären monohydroxyfunktionellen Verbindungen mit 1 bis 12 Kohlenstoffatomen, bevorzugt primären monohydroxyfunktionellen Verbindungen und/oder

A2) polymeren monohydroxyfunktionellen Verbindung, bevorzugt Polyethermonoole, Polycarbonatmonoole, Polyestercarbonatmonoole, Polyethercarbonatmonoole, Polyetherestercarbonatmonoole und/oder Mischungen davon, wobei die polymeren monohydroxyfunktionelle Verbindung besonders bevorzugt eine primäre Hydroxylgruppe aufweist.

Nach einer dritten Ausführungsform betrifft die Erfindung ein Verfahren nach Ausführungsform 2, dadurch gekennzeichnet, dass die monohydroxyfunktionelle Verbindung A1) ausgewählt ist aus der Gruppe, umfassend oder bestehend aus acyclischen und/oder cyclischen monohydroxyfunktionellen Alkanolen und/oder acyclischen und/oder cyclischen monohydroxyfunktionellen Alkenolen, bevorzugt Methanol, Ethanol, iso-Propanol, n-Propanol, iso-Butanol, n-Butanol, sec-Butanol, tert-Butanol, Pentan-1-ol, Pentan-2-ol, Pentan-3-ol, 2-Methyl-butan-1-ol, 2-Methyl-butan-2-ol, 3-Methyl-butan-1-ol, 3-Methylbutan-2-ol, 2,2-Dimethyl-propan-1-ol, Hexan-1-ol, Hexan-2-ol, Hexan-3-ol, 2-Methylpentan-1-ol, 3-Methylpentan-1-ol, 4-Methylpentan-1-ol, 2-Methylpentan-2-ol, 3-Methylpentan-2-ol, 2,2-Dimethylbutan-1-ol, 2,3-Dimethylbutan-1-ol, 3,3-Dimethylbutan-1-ol, 2,3-Dimethylbutan-2-ol, 3,3-Dimethylbutan-2-ol, 2-Ethyl-1-butanol, 2-Methyl-3-butin-2-ol, 3-Butin-1-ol, Propagylalkohol, 1-tert-Butoxy-2-propanol, 1-Heptanol, 2-Heptanol, 3-Heptanol, 4-Heptanol, 1-Octanol, 2-Octanol, 3-Octanol, 4-Octanol, 1-Nonanol, 2-Nonanol, 3-Nonanol, 4-Nonanol, 5-Nonanol, 1-Decanol, 2-Decanol, 3-Decanol, 4-Decanol, 5-Decanol, 1-Undecanol, 2-Undecanol, 3-Undecanol, 4-Undecanol, 5-Undecanol, 6-Undecanol, 1-Dodecanol, 2-Dodecanol, 3-Dodecanol, 4-Dodecanol, 5-Dodecanol, 6-Dodecanol oder Mischungen davon.

Nach einer vierten Ausführungsform betrifft die Erfindung ein Verfahren nach Ausführungsform 2 oder 3, dadurch gekennzeichnet, dass die polymere monohydroxyfunktionelle Verbindung A2) eine Hydroxylzahl von 20 bis 250 mg KOH/g aufweist, vorzugsweise 20 bis 112 mg KOH/g und besonders bevorzugt 20 bis 50 mg KOH/g, gemessen nach DIN 53240-3:2016-03.

Nach einer fünften Ausführungsform betrifft die Erfindung ein Verfahren nach einer der vorstehenden Ausführungsformen 2 bis 4, dadurch gekennzeichnet, dass der Stoffmengenanteil der OH-Gruppen der Summe der Komponenten A1) und A2) 25,0 bis 90,0 mol-%, bevorzugt 35,0 bis 85,0 mol-%, besonders bevorzugt 40,0 bis 80,0 mol-% beträgt, bezogen auf die Gesamtstoffmenge der OH-Gruppen der Komponente A).

Nach einer sechsten Ausführungsform betrifft die Erfindung ein Verfahren nach einer der vorstehenden Ausführungsformen, dadurch gekennzeichnet, dass das Polyol der Komponente A) ausgewählt ist aus der Gruppe, umfassend oder bestehend aus

A3) Polyethercarbonatpolyole,

A4) Polyetherpolyole, Polyesterpolyole, Polycarbonatpolyole

und/oder Mischungen von diesen, wobei das Polyol der Komponente A) bevorzugt wenigstens ein Polyethercarbonatpolyol A3) umfasst.

Nach einer siebten Ausführungsform betrifft die Erfindung ein Verfahren nach einer der vorstehenden Ausführungsformen, dadurch gekennzeichnet, dass der Kettenverlängerer und/oder Vernetzer der Komponente A) ausgewählt ist aus der Gruppe, umfassend oder bestehend aus

A5) NCO-reaktiven Verbindungen mit einer OH- und/oder NH-Funktionalität von mindestens 2 und einem Molekulargewicht von 62 bis 800 g/mol, wobei die NCO-reaktiven Verbindungen A5) bevorzugt ausgewählt sind aus der Gruppe, umfassend oder bestehend aus Ethylenglykol, Diethylenglykol, 1,2-Propandiol, 1,3-Propandiol, 1,4-Butandiol, 1,6-Hexandiol, Glycerin, 1,1,1-Trimethylolpropan, Pentaerythrit, Monoethanolamin, Diethanolamin oder Mischungen davon.

Nach einer achten Ausführungsform betrifft die Erfindung ein Verfahren nach einer der vorstehenden Ausführungsformen, dadurch gekennzeichnet, dass im ersten Schritt ein Teil des Polyols der Komponente A) bedeutet, dass 20,0 bis 80,0 Gew.-%, bevorzugt 30,0 bis 70,0 Gew.-%, besonders bevorzugt 50,0 bis 65,0 Gew.-% der gesamten Menge des Polyols der Komponente A) eingesetzt wird.

Nach einer neunten Ausführungsform betrifft die Erfindung ein Verfahren nach einer der vorstehenden Ausführungsformen, dadurch gekennzeichnet, dass das aliphatische oligomere Polyisocyanat der Komponente B) Isocyanat-tragende Oligomere, gebildet aus (2n+1) aliphatischen Polyisocyanaten, umfasst, wobei n eine natürliche Zahl von 1 bis 10 ist und das aliphatische oligomere Polyisocyanat der Komponente B) zu wenigstens 90 Gew.-% aus diesen Isocyanat-tragenden Oligomeren besteht.

Nach einer zehnten Ausführungsform betrifft die Erfindung ein Verfahren nach Ausführungsform 9, dadurch gekennzeichnet, dass das aliphatische oligomere Polyisocyanat der Komponente B) ein Isocyanat-tragendes Trimer umfasst, wobei die Komponente B) insbesondere eine Mischung aus diesem Trimer und wenigstens einem weiteren Isocyanat-tragenden Oligomer, gebildet aus (2n+1) aliphatischen Polyisocyanaten, enthält, bei dem n eine natürliche Zahl von 2 bis 10 ist und das aliphatische oligomere Polyisocyanat der Komponente B) zu wenigsten 30,0 Gew.-%, bevorzugt 30,0 bis 80,0 Gew.-% aus diesen Isocyanat-tragenden Trimeren besteht.

Nach einer elften Ausführungsform betrifft die Erfindung ein Verfahren nach einer der vorstehenden Ausführungsformen, dadurch gekennzeichnet, dass das aliphatische oligomere Polyisocyanat der Komponente B) Isocyanurat-, Iminooxadiazindion-, und/oder Biuret-Gruppen enthält.

Nach einer zwölften Ausführungsform betrifft die Erfindung ein Verfahren nach einer der vorstehenden Ausführungsformen, dadurch gekennzeichnet, dass das aliphatische oligomere Polyisocyanat der Komponente B) ein Isocyanat-tragendes Trimer der Formel (VI) und/oder Formel (VII), jeweils gebildet aus 3 aliphatischen Polyisocyanaten, umfasst, wobei R unabhängig voneinander eine aliphatische C1 bis C15 Kohlenstoffkette ist.

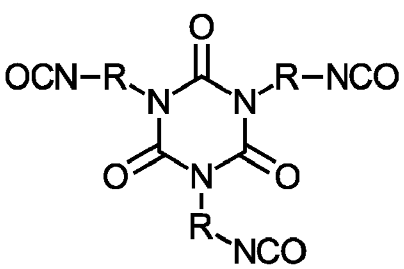

Formel (VI)

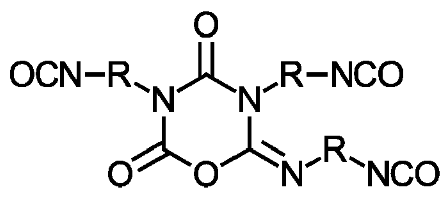

Formel (VII)

Nach einer dreizehnten Ausführungsform betrifft die Erfindung ein Verfahren nach einer der vorstehenden Ausführungsformen, dadurch gekennzeichnet, dass das aliphatische oligomere Polyisocyanat der Komponente B) aus einem Diisocyanat mit 1 bis 15 Kohlenstoffatomen hergestellt ist, wobei das Diisocyanat vorzugsweise ausgewählt ist aus 1,5-Pentamethylen-Diisocyanat und/oder 1,6-Hexamethylen-Diisocyanat.

Nach einer vierzehnten Ausführungsform betrifft die Erfindung ein Verfahren nach einer der vorstehenden

Ausführungsformen, dadurch gekennzeichnet, dass das monomere aliphatische Polyisocyanat der Komponente B) ausgewählt ist aus der Gruppe, umfassend oder bestehend aus 1,5-Pentamethylen-Diisocyanat, 1,6-Hexamethylen-Diisocyanat, 1-Isocyanato-3-isocyanato-methyl-3,5,5-trimethylcyclohexan, Dicyclohexylmethan-4,4'-diisocyanate oder Mischungen davon und/oder das dimere aliphatische Polyisocyanat der Komponente B) ausgewählt ist aus dimeren Verbindungen von 1,5-Pentamethylen-Diisocyanat, 1,6-Hexamethylen-Diisocyanat, 1-Isocyanato-3-isocyanato-methyl-3,5,5-trimethylcyclohexan, Dicyclohexylmethan-4,4'-diisocyanate oder gemischten Dimeren davon.

Nach einer fünfzehnten Ausführungsform betrifft die Erfindung ein Verfahren nach einer der vorstehenden Ausführungsformen, dadurch gekennzeichnet, dass die Komponente B) eine mittlere NCO-Funktionalität pro Molekül von $\geq$ 2,0, bevorzugt von 2,3 bis 4,3, besonders bevorzugt von 2,5 bis 4,2, ganz besonders von 2,8 bis 4,1 und am meisten bevorzugt von 3,0 bis 4,0 aufweist.

Nach einer sechzehnten Ausführungsform betrifft die Erfindung ein Verfahren nach einer der vorstehenden Ausführungsformen, dadurch gekennzeichnet, dass der Gesamtgehalt an metallorganischen Katalysatoren, insbesondere an Dibutylzinndilaurat, Dibutylzinnoxid, Dimethylzinndineodecanoat, Dioctylzinndineodecanoat und Dimethylzinn(IV)dimercaptid, in der Zusammensetzung weniger als 10,0 ppm, bevorzugt weniger als 5,0 ppm, besonders bevorzugt weniger als 3,0 ppm, ganz besonders bevorzugt weniger als 1,0 ppm, beträgt.

Nach einer siebzehnten Ausführungsform betrifft die Erfindung ein Verfahren nach einer der vorstehenden Ausführungsformen, dadurch gekennzeichnet, dass die Zusammensetzung keine metallorganischen Katalysatoren, insbesondere Dibutylzinndilaurat, Dibutylzinnoxid, Dimethylzinndineodecanoat, Dioctylzinndineodecanoat und Dimethylzinn(IV)dimercaptid, umfasst.

Nach einer achtzehnten Ausführungsform betrifft die Erfindung ein Verfahren nach einer der vorstehenden Ausführungsformen, dadurch gekennzeichnet, dass der Gelkatalysator D1) ausgewählt ist aus der Gruppe, umfassend oder bestehend aus anorganischen Katalysatoren, wie Zinn(II)bis(2-ethylhexanoat), Zinn(II)bis(neodecanoat), Bismuth(III)tris(2-ethylhexanoat), Bismuth(III)tris(neodecanoat) oder Mischungen davonder Gelkatalysator D1) ausgewählt ist aus der Gruppe, umfassend oder bestehend aus anorganischen Katalysatoren, wie Zinn(II)bis(2-ethylhexanoat), Zinn(II)bis(neodecanoat), Bismuth(III)tris(2-ethylhexanoat), Bismuth(III)tris(neodecanoat) oder Mischungen davon.

Nach einer neunzehnten Ausführungsform betrifft die Erfindung ein Verfahren nach einer der vorstehenden Ausführungsformen, dadurch gekennzeichnet, dass der Treibkatalysator D2) ausgewählt ist aus der Gruppe, umfassend oder bestehend aus Bis[2-(N,N-dimethylamino)ethyl]ether, 1,8-Diazabicyclo[5.4.0]undec-7-en, 1,1,3,3-Tetramethylguanidin oder Mischungen davon.

Nach einer zwanzigsten Ausführungsform betrifft die Erfindung ein Verfahren nach einer der vorstehenden Ausführungsformen, dadurch gekennzeichnet, dass die Umsetzung bei einer Isocyanat-Kennzahl von 65 bis 120 erfolgt, bevorzugt von 70 bis 110, weiter bevorzugt von 75 bis 110 und ganz besonders bevorzugt von 80 bis 110.

Nach einer einundzwanzigsten Ausführungsform betrifft die Erfindung ein Verfahren nach einer der vorstehenden Ausführungsformen, dadurch gekennzeichnet, dass in dem ersten Schritt die Umsetzung bei einer Temperatur von 20 bis 50 °C durchgeführt wird, bevorzugt bei 25 bis 45 °C.

Nach einer zweiundzwanzigsten Ausführungsform betrifft die Erfindung ein Verfahren nach einer der vorstehenden Ausführungsformen, dadurch gekennzeichnet, dass in dem zweiten Schritt die Präpolymer-Mischung aus NCO-funktionellem Präpolymer und überschüssiger Komponente B) eine Temperatur von 25 bis 60 °C aufweist, bevorzugt von 40 bis 50 °C.

Nach einer dreiundzwanzigsten Ausführungsform betrifft die Erfindung eine Präpolymer-Mischung aus einem NCO-funktionellen Präpolymer und überschüssiger Komponente B), hergestellt oder erhältlich durch ein Verfahren gemäß einer der Ausführungsformen 1 bis 22, wobei die Mischung lagerstabil ist, wobei lagerstabil bedeutet, dass die Präpolymer-Mischung über einen Zeitraum von wenigstens 1 Monat, bevorzugt von wenigstens 2 Monaten, besonders bevorzugt von wenigstens 4 Monaten bei 25 °C $\pm$ 5 °C unter Stickstoffatmosphäre eine Viskositätsänderung (gemessen bei 45°) von höchstens 8000 mPa·s, bevorzugt von höchstens 5000 mPa·s, besonders bevorzugt von höchstens 3000 mPa·s aufweist, bestimmt mittels Viskosimetrie.

Nach einer vierundzwanzigsten Ausführungsform betrifft die Erfindung einen aliphatischen Polyurethan-Weichschaumstoff, erhalten oder erhältlich durch ein Verfahren gemäß einer der Ausführungsformen 1 bis 22.

Nach einer fünfundzwanzigsten Ausführungsform betrifft die Erfindung einen aliphatischen Polyurethan-Weichschaumstoff nach Ausführungsform 24, dadurch gekennzeichnet, dass der Polyurethan-Weichschaumstoff eine Stauchhärte im 4. Zyklus von $\leq$ 15,0 kPa aufweist, bevorzugt von $\leq$ 14,0 kPa und besonders bevorzugt von 4,0 kPa bis 12,0 kPa, gemessen nach DIN EN ISO 3386-1.

Nach einer sechsundzwanzigsten Ausführungsform betrifft die Erfindung einen aliphatischen Polyurethan-Weichschaumstoff nach Ausführungsform 24 oder 25, dadurch gekennzeichnet, dass der Polyurethan-Weichschaumstoff einen Druckverformungsrest-Wert (DVR) von $\leq$ 6,0 % aufweist, bevorzugt von $\leq$ 5,0 %, weiter bevorzugt von $\leq$ 4,0 %, besonders bevorzugt von 0,1 bis 4,0 %, gemessen nach DIN EN ISO 1856 -2008.

Nach einer siebenundzwanzigsten Ausführungsform betrifft die Erfindung eine Verwendung eines aliphatischen Polyurethan-Weichschaumstoffs gemäß einer der Ausführungsformen 24 bis 26 als oder zur Herstellung von körperstützenden Elementen, insbesondere Polster, Matratzen, Möbeln, Schuheinlagen, Automobilarmauflagen, Automobilsitzen und Motorradsitzen.

Nach einer achtundzwanzigsten Ausführungsform betrifft die Erfindung eine Verwendung einer monohydroxyfunktionellen Verbindung in Kombination mit einem aliphatischen oligomeren Polyisocyanat und gegebenenfalls einem aliphatischen monomeren Polyisocyanat zur Herstellung von einem aliphatischen Polyurethan-Weichschaumstoff, insbesondere nach einem Verfahren gemäß einer der Ausführungsformen 1 bis 22 , wobei der aliphatische Polyurethan-Weichschaumstoff insbesondere weniger als 10,0 ppm, bevorzugt weniger als 5,0 ppm, besonders bevorzugt weniger als 3,0 ppm, ganz besonders bevorzugt weniger als 1,0 ppm an metallorganischen Katalysatoren, insbesondere an Dibutylzinndilaurat, Dibutylzinnoxid, Dimethylzinndineodecanoat, Dioctylzinndineodecanoat, Dimethylzinn(IV)dimercaptid oder Mischungen davon, enthält

## Beispiele und Vergleichsbeispiele:

Die vorliegende Erfindung wird im Folgenden anhand von Beispielen erörtert, ist jedoch nicht auf diese beschränkt.

Verwendete Komponenten:

Verwendete Komponenten A1):

- Ethanol

Verwendete Komponente A3):

- Cardyon® LC 05 (Polyethercarbonatpolyol, OH-Zahl: 55 mg KOH/g, typische $CO_2$-Inkorporation: 14 Gew.-%)

Verwendete Komponenten A5):

- Diethylenglykol (DEG)
- Diethanolamin (DEA)

Verwendete Komponente B1):

- Desmodur® eco N 7300 (Biobasiertes, Isocyanuratgruppen-haltiges aliphatisches Polyisocyanat auf Basis von 1,5-Pentamethylen-Diisocyanat (PDI) mit einem NCO-Gehalt von 21,9 Gew.-% (nach DIN EN ISO 11909:2007), einer mittleren NCO-Funktionalität von ≥ 3,0 (nach GPC), einem Gehalt an monomerem PDI von maximal 0,3 Gew.-% und einer Viskosität von 9500 mPa·s (bei 23 °C, bestimmt nach DIN EN ISO 3219))

Verwendete Komponente B2):

- 1,5-Pentamethylen-Diisocyanat

Verwendete Komponente C):

- Wasser

Verwendete Komponenten D1):

- Kosmos® Pro 1 (Zinn(II)-neodecanoat)
- Borchi® Kat 315 (Bismuth(III)-trisneodeconoate)

Verwendete Komponenten D2):

- 1,1,3,3-Tetramethylguanidin (TMG)

Verwendete Komponenten E):

- Tegostab®B8783 LF 2 (Firma Evonik Operations GmbH, Essen)
- Tegostab® BF 2370 (Firma Evonik Operations GmbH, Essen)

Verwendete Komponenten F):

- Ortegol® 500 (Firma Evonik Operations GmbH, Essen)

Verwendete Messverfahren:

- Die Bestimmung der Stauchhärte (CV) erfolgt nach DIN EN ISO 3386-1. Für die Messungen werden zwei bzw. drei Prüfkörper mit den Dimensionen 6 cm x 6 cm x 3 cm geschnitten. Die Prüfungen werden auf dem Gerät 2,5kN RetroLine der Firma Zwick/Roell bei 22 °C und 47% relativer Luftfeuchte durchgeführt. Die Messgeometrie besteht aus einer Grundplatte, auf die der Probenkörper gelegt wird, und einer Druckplatte. Zu Beginn der Messung entspricht der Abstand zwischen beiden Platten der Höhe der Probe. Die Messungen bestehen aus drei Vorzyklen und einem anschließenden Messzyklus, wobei für den ersten Vorzyklus und den Messzyklus Daten erfasst werden. Ein Zyklus besteht aus einer Deformation mit einer Geschwindigkeit von 100 mm/min im Bereich von 0 bis 70 % und einer Entlastung bis die Messplatten wieder den Ursprungsabstand erreicht haben. Aus den Messwerten wird die Druckspannung/Stauchhärte bei verschiedenen Deformationen bestimmt. Ein häufig angegebener Wert ist die Stauchhärte bei 40 % Verformung ($CV_{40}$), die sich nach der nachfolgenden Formel berechnen lässt.

$$CV_{40}[kPa] = \frac{F_{40}}{A_{Stauch}} \cdot 1000$$

Mit:

$CV_{40}$ = Stauchhärte/Druckspannungswert bei einer Verformung von 40% [kPa]

$F_{40}$ = Kraft bei 40 % Verformung, ermittelt im 4. Belastungszyklus [N]

$A_{Stauch}$ = Oberfläche des Probenkörpers [$mm^2$]

- Der Druckverformungsrest (DVR) wird nach DIN EN ISO 1856-2008 bestimmt. Dazu werden jeweils drei Prüfkörper der Maße 5 cm x 5 cm x 2,5 cm geschnitten. Diese werden so zwischen zwei Platten gespannt, dass sie um 50% komprimiert werden und so für 22 h in einem Ofen bei 70 °C gelagert. Anschließend werden die Schäume aus der Kompressionshalterung entfernt und nach 30 min Lagerung bei 22 °C die Höhe der Prüfkörper bestimmt. Es werden 3 Prüfkörper untersucht und der mittlere DVR als Ergebnis angegeben.
- Viskosität: Die Viskositätsmessung der Desmodur-Typen (Desmodur ultra N 3600, Desmodur ultra N3300, Desmodur eco N7300) erfolgt nach DIN EN ISO 3219 mit RheolabQC-Geräten der Firma Anton Paar.
- Startzeit (oder auch Liegezeit): Es ist der Zeitraum vom Beginn des Mischvorganges bis zu einer optisch wahrnehmbaren Veränderung des Reaktionsgemisches, also bis zum ersten Aufsteigen des Reaktionsgemisches. Um das Aufsteigen besser zu erkennen, können Hilfslinien (schräg nach oben verlaufende Linien) im Gefäß, in welches das Reaktionsgemisch gefüllt wurde, mit einem Stift eingezeichnet werden.
- Abbindezeit (Klebfreizeit): Unter Abbindezeit wird im Rahmen der Erfindung die so genannte Klebfreizeit ("tack-free-time") verstanden. Die Klebfreizeit ist dabei die Zeitspanne vom Beginn der Vermischung bis zu dem Zustand/Zeitpunkt, bei dem die Oberfläche der Schaumstoffmasse nicht mehr klebrig ist. Sie wird bestimmt, indem man den nicht mehr aufsteigenden Schaum mittels eines Holzstäbchens tupfend berührt. Der Zeitpunkt, ab dem kein Ankleben mehr erfolgt wird als Klebfreizeit bezeichnet.
- Rohdichte (beziehungsweise Raumgewicht) nach DIN EN ISO 845.
- Zugversuch nach DIN EN ISO 1798:2008 (hierbei wird die Bruchspannung und die Bruchdehnung bestimmt).
- Lagerstabilität (Viskositätsentwicklung): Die Mischungen aus NCO-funktionellen Präpolymer und überschüssiger Komponente B) wurden jeweils frisch, nach 1 Monat, nach 2 Monaten, nach 4 Monaten und gegebenenfalls nach 6 Monaten hinsichtlich ihren Viskositätsänderungen untersucht. Die Lagerung erfolgte unter Stickstoffatmosphäre bei Raumtemperatur. Die Messungen zur Viskositätsentwicklung erfolgte auf einem Rheometer MCR 301 der Firma AntonPaar. Es wurde eine Kegel-Platte Geometrie mit einem Spaltabstand von 0,047 mm verwendet. Als Messparameter werden eine konstante Scherrate von 50 Hz und eine Plattentemperatur von 45 °C verwendet. Die Aufnahme

der Messwerte (für 60 s Messungen im Abstand von je 6 s) erfolgte mithilfe der Software Rheoplus/32 (Version 3.61, Anton Paar). Aus dem Mittelwert der 10 Messwerte ergibt sich die dynamische Viskosität ($\eta$) der Probe.

- Gehalt an freien NCO-Gruppen (NCO-%): Gemäß DIN EN ISO 11909:2007
- Bestimmung des Reaktionsendes: Die Bestimmung des Endes der Reaktion zur Edukt-Mischung erfolgte mittels IR-Spektroskopie. Dabei wurde die Änderung der NCO-Bande sowie OH-Bande beobachtet. Ein Ende der Reaktion wurde angenommen, wenn im IR-Spektrum keine signifikante Änderung der NCO-Bande mehr feststellbar beziehungsweise die OH-Bande nicht mehr erkennbar/verschwunden war.

Erster Schritt des Präpolymerverfahrens:

Zunächst wurde der erste Schritt des Präpolymerverfahrens durchgeführt.

Edukt-Mischung aus aliphatischen oligomeren Polyisocyanat und monohydroxyfunktionellen Verbindung ("Q"): Dafür wurde zuerst das mindestens eine aliphatische oligomere Polyisocyanat mit der monohydroxyfunktionellen Verbindung umgesetzt. Demgemäß wurde Ethanol zu Desmodur® eco N 7300 gegeben und durch Rühren vermischt. Die Reaktion erfolgte ohne Katalysator bei 45 °C. Das Ende der Reaktion wurde mittels IR-Spektroskopie wie oben dargelegt bestimmt. Die eingesetzten Mengen (in [g]) sind der Tabelle 1 zu entnehmen. Die erhaltene Edukt-Mischung wird im Folgenden auch als "Q" bezeichnet.

Präpolymer-Mischungen 1 bis 4 (P1, P2, P3, P4):
Die Präpolymer-Mischungen aus NCO-funktionellen Präpolymer und überschüssiger Komponente B) wurden durch Umsetzung der jeweiligen Edukt-Mischungen aus aliphatischen oligomeren Polyisocyanat und monohydroxyfunktioneller Verbindung (hier Q) mit einem Teil des Polyols der Komponente A) und gegebenenfalls der gesamten Menge an monomeren aliphatischen Polyisocyanat erhalten. Dementsprechend wurde die Edukt-Mischung Q mit Cardyon® LC05 und gegebenenfalls PDI versetzt und vermischt. Die Rohstofftemperatur der Edukt-Mischung Q und des Cardyon® LC05 betrug 45 °C, die des PDI 23 °C. Die Reaktion erfolgte ohne Katalysator bei 45 °C. Über den NCO-%-Wert wurde das Ende der Reaktion bestimmt. Die eingesetzten Mengen (in [g]) sind der Tabelle 1 zu entnehmen.

**Tabelle 1:** "Präpolymer-Mischungen"

| **Komponente** | **OHZ** | **Q** | **P1** | **P2** | **P3** | **P4** | **P5** |
|---|---|---|---|---|---|---|---|
| A1) | 1218 | 13,91 | - | - | - | - | - |
| A3) | 55 | - | 82,15 | 102,26 | 93,23 | 99,46 | 75,56 |
| B1) | | 236,08 | - | - | - | - | - |
| B2) | | - | 16,14 | 32,40 | 25,15 | 33,53 | - |
| Q | | - | 151,7 | 115.34 | 131,62 | 117,01 | 175,44 |
| NCO-% gem. DIN EN ISO 11909:2007 | | 15,48±0,20 | 10,85 | 12,64 | 11,75 | 12,45 | 8,01 |

Lagerstabilität:
Es wurde die Lagerstabilität von der Edukt-Mischung Q und den Präpolymer-Mischungen P1 und P2 anhand der bereits weiter oben beschriebenen Methode untersucht. Die Ergebnisse sind in Tabelle 2 zusammengefasst.

**Tabelle 2:** Lagerstabilität der Edukt-Mischung Q und "Präpolymer-Mischungen" P1 und P2.

| **Mischungen** | $\eta_{frisch}$ [mPa•s] | $\eta_{1\ Monat}$ [mPa•s] | $\eta_{2\ Monat}$ [mPa•s] | $\eta_{4\ Monat}$ [mPa•s] | $\eta_{6\ Monat}$ [mPa•s] |
|---|---|---|---|---|---|
| **Q** | 5030 | 5200 | 5020 | 5280 | - |
| **P1** | 8780 | 11400 | 12360 | 13400 | 13500 |
| **P2** | 2440 | 4180 | 4330 | 4390 | - |

Wie der Tabelle 2 zu entnehmen ist, erhöhten sich die Viskositäten der jeweiligen Präpolymer-Mischungen sowie der Edukt-Mischung in den angegebenen Zeiträumen nur sehr gering. Sowohl die Präpolymer-Mischungen als auch die Edukt-Mischung sind somit gemäß der oben dargelegten Definition lagerstabil.

Zweiter Schritt des Präpolymerverfahrens:

Die in dem ersten Schritt erhaltenen Präpolymer-Mischungen P3, P4 und P5 wurden zu entsprechenden aliphatischen Polyurethan-Weichschaumstoffe umgesetzt. In dem Vergleichsbeispiel 1 wurde lediglich die Edukt-Mischung Q eingesetzt.

Dazu wurde eine Isocyanat-reaktive Zusammensetzung aus Cardyon® LC05, Diethylenglykol, Diethanolamin, Tegostab® BF 2370 oder Tegostab® B 8783 LF2 und 1,1,3,3-Tetramethylguanidin mit einem Rührer bei 1150 U/min für 30 s vermischt. Dann wurde dazu der Katalysator Kosmos® Pro 1 oder Borchi® Kat 315 gegeben und wiederum mit einem Rührer vermischt (1150 U/min für 15 s). Diese Mischung wurde mit der jeweiligen "Präpolymer-Mischung" (P3, P4 oder P5) bzw. der Edukt-Mischung Q mit einem Rührer bei 2100 U/min für 15 s vermischt und in eine Form gegossen. Die Rohstofftemperatur dieser Mischungen betrug jeweils 45 °C, die aller übrigen Komponenten 23 °C. Die Aushärtung erfolgte bei Umgebungstemperatur.

Die in der Tabelle 3 aufgeführten Beispiele wurden entsprechend den dort angegebenen Mengen (in [g]) hergestellt.

**Tabelle 3:** Polyurethan-Weichschaumstoffe

| **Komponente** | OHZ | Beispiel 1 | Beispiel 2 | Beispiel 3 | Beispiel 4 | Vergleichsbeispiel 1 |
|---|---|---|---|---|---|---|
| A3) | 55 | 62,64 | 60,11 | 60,11 | 40,54 | 131,62 |
| A5) (Diethanolamin) | 1609 | 2,35 | 2,25 | 2,25 | 1,52 | 2,35 |
| A5) (Diethylenglykol) | 1057 | 3,91 | 3,76 | 3,76 | 2,53 | 3,91 |
| C) | 6228 | 3,91 | 3,76 | 3,76 | 3,04 | 3,91 |
| D1) (Kosmos® Pro 1) | | 2,50 | 2,50 | - | 2,50 | 2,50 |
| D1) (Borchi® Kat 315) | | - | - | 2,50 | - | - |
| D2) | | 0,50 | 0,50 | 0,50 | 0,50 | 0,50 |
| E) (Tegostab® BF 2370) | | - | - | - | 1,0 | - |
| E) (Tegostab® B8783 LF2) | | 0,63 | 0,60 | 0,60 | - | 0,63 |
| F) | | 0,16 | 0,15 | 0,15 | 0,15 | 0,16 |
| P4 | | 173,40 | - | - | - | - |
| P3 | | - | 176,37 | 176,37 | - | - |
| Q | | - | - | - | - | 81,16 |
| P5 | | - | - | - | 198,37 | - |
| B2) | | - | - | - | - | 23,26 |
| Summe | | 250 | 250 | 250 | 250 | 250 |
| Kennzahl | | 80,0 | 80,0 | 80,0 | 80 | 80,0 |
| Startzeit [s] | | 35 | 40 | 80 | 40 | 47 |
| Abbindezeit (Klebfreizeit) [s] | | 240 | 230 | 540 | 130 | n.b. |
| Raumgewicht [kg/m$^3$] | | 61 | 70 | 73 | 83 | n.b. |
| Bruchspannung [kPa] | | 65 | 77 | 78 | 78 | n.b. |
| Bruchdehnung [%] | | 127 | 127 | 119 | 92 | n.b. |
| DVR [%] | | 1,6 | 1,8 | 1,6 | 3,9 | n.b. |
| Stauchhärte ($CV_{40}$, 40% Kompression) 4. Zyklus [kPa] | | 4,6 | 3,6 | 5,6 | 12,0 | n.b. |
| n.b. = nicht bestimmbar, da der Schaum kollabiert ist. | | | | | | |

Die Beispiele zeigen alle, dass es möglich ist aliphatische Weichschäume über das hier beschriebene Präpolymerverfahren herzustellen. Durch die Verwendung der Präpolymere P1 bis P5 ist bereits eine Vorstufe für das Polymernetzwerk erfolgt, im Gegensatz zur Eduktmischung Q, bei der durch die Reaktion der oligomeren Polyisocyanate mit den einfachen Alkoholen die Anzahl der NCO-Gruppen und damit die Funktionalität reduziert wurde. Hierdurch ist es möglich mit weniger aktiven anorganischen Katalysatoren und insbesondere unter Verzicht auf metallorganische

Katalysatoren, zu Weichschäumen mit guten physikalischen Eigenschaften zu kommen (siehe Beispiele 1 bis 4).

Für die Herstellung des Präpolymers 5 wurden ausschließlich oligomere Polyisocyanate verwendet. Die oligomeren Isocyanate haben alle deutlich höhere Viskositäten als die monomeren Polyisocyanate. Dies gilt insbesondere für die PDI basierten oligomeren Polyisocyanate. So hat Desmodur eco N7300 von der Covestro Deutschland AG eine dynamische Viskosität von 9300 mPa*s (23°C).

Durch die Präpolymere ist ein Einsatz von monomeren Polyisocyanaten mit einem geringeren Gefährdungspotential möglich. Ohne an eine Theorie gebunden zu sein wird angenommen, dass aufgrund der oligomeren Polyisocyanate weniger monomere aliphatische Polyisocyanate für die Herstellung erforderlich sind und ferner der Partialdruck der monomeren Polyisocyanate durch die Wechselwirkung mit den oligomeren Polyisocyanate zu einer Verringerung des Aktiviätskoeffizienten führt. Damit wird der partielle Einsatz von monomeren Polyisocyanaten für die Herstellung von aliphatischen Weichschäumen deutlich erleichtert.

## Patentansprüche

1. Verfahren zur Herstellung von aliphatischen Polyurethan-Weichschaumstoffen durch Umsetzung einer Zusammensetzung mit den Komponenten

   A) mindestens eine monohydroxyfunktionelle Verbindung, mindestens ein Polyol sowie gegebenenfalls mindestens ein Kettenverlängerer und/oder ein Vernetzungsmittel;
   B) mindestens ein aliphatisches oligomeres Polyisocyanat und gegebenenfalls ein monomeres aliphatisches Polyisocyanat und/oder ein dimeres aliphatisches Polyisocyanat;
   C) mindestens ein chemisches und/oder physikalisches Treibmittel;
   D) mindestens ein Gelkatalysator D1) und ein Treibkatalysator D2);
   E) gegebenenfalls eine oberflächenaktive Verbindung und
   F) gegebenenfalls von Komponente E) verschiedene Hilfs- und Zusatzstoffe

   bei einer Isocyanat-Kennzahl von wenigstens 65, wobei die Umsetzung die folgenden zwei Schritte umfasst:

   • In einem ersten Schritt wird das aliphatische oligomere Polyisocyanat der Komponente B) mit der monohydroxyfunktionellen Verbindung der Komponente A) umgesetzt und die dadurch erhaltene Edukt-Mischung wird mit einem Teil des Polyols der Komponente A) und gegebenenfalls dem monomeren aliphatischen Polyisocyanat und/oder dem dimeren aliphatischen Polyisocyanat der Komponente B) zu einer Präpolymer-Mischung aus NCO-funktionellen Präpolymer und überschüssiger Komponente B) umgesetzt, wobei die Präpolymer-Mischung einen Gehalt an freien NCO-Gruppen von $\geq$ 5,0 Gew.-%, bevorzugt von $\geq$ 5,0 Gew.-% bis $\leq$ 25,0 Gew.-% , weiter bevorzugt von $\geq$ 8,0 Gew.-% bis $\leq$ 20,0 Gew.-% aufweist, bezogen auf das Gesamtgewicht dieser Präpolymer-Mischung, bestimmt gemäß DIN EN ISO 11909:2007;
   • In einem zweiten Schritt wird diese Präpolymer-Mischung mit dem restlichen Teil des Polyols der Komponente A), dem chemischen und/oder physikalischen Treibmittel der Komponente C), dem Gelkatalysator D1), dem Treibkatalysator D2), sowie gegebenenfalls dem Kettenverlängerer und/oder Vernetzungsmittel der Komponente A), gegebenenfalls der Komponenten E) und gegebenenfalls der Komponente F) zu dem aliphatischen Polyurethan-Weichschaumstoff umgesetzt.

2. Verfahren nach Anspruch 1, **dadurch gekennzeichnet, dass** die monohydroxyfunktionelle Verbindung der Komponente A) ausgewählt ist aus der Gruppe, umfassend oder bestehend aus

   A1) primären, sekundären und/oder tertiären monohydroxyfunktionellen Verbindungen mit 1 bis 12 Kohlenstoffatomen, bevorzugt primären monohydroxyfunktionellen Verbindungen und/oder
   A2) polymeren monohydroxyfunktionellen Verbindung, bevorzugt Polyethermonoole, Polycarbonatmonoole, Polyestercarbonatmonoole, Polyethercarbonatmonoole, Polyetherestercarbonatmonoole und/oder Mischungen davon, wobei die polymeren monohydroxyfunktionelle Verbindung besonders bevorzugt eine primäre Hydroxylgruppe aufweist,

   wobei der Stoffmengenanteil der OH-Gruppen der Summe der Komponenten A1) und A2) vorzugsweise 25,0 bis 90,0 mol-%, weiter bevorzugt 35,0 bis 85,0 mol-%, besonders bevorzugt 40,0 bis 80,0 mol-% beträgt, bezogen auf die Gesamtstoffmenge der OH-Gruppen der Komponente A).

3. Verfahren nach Anspruch 2, **dadurch gekennzeichnet, dass** die monohydroxyfunktionelle Verbindung A1) ausgewählt ist aus der Gruppe, umfassend oder bestehend aus acyclischen und/oder cyclischen monohydroxyfunktionellen Alkanolen und/oder acyclischen und/oder cyclischen monohydroxyfunktionellen Alkenolen, bevorzugt Methanol, Ethanol, iso-Propanol, n-Propanol, iso-Butanol, n-Butanol, sec-Butanol, tert-Butanol, Pentan-1-ol, Pentan-2-ol, Pentan-3-ol, 2-Methyl-butan-1-ol, 2-Methyl-butan-2-ol, 3-Methyl-butan-1-ol, 3-Methyl-butan-2-ol, 2,2-Dimethylpropan-1-ol, Hexan-1-ol, Hexan-2-ol, Hexan-3-ol, 2-Methylpentan-1-ol, 3-Methylpentan-1-ol, 4-Methylpentan-1-ol, 2-Methylpentan-2-ol, 3-Methylpentan-2-ol, 2,2-Dimethylbutan-1-ol, 2,3-Dimethylbutan-1-ol, 3,3-Dimethylbutan-1-ol, 2,3-Dimethylbutan-2-ol, 3,3-Dimethylbutan-2-ol, 2-Ethyl-1-butanol,2-Methyl-3-butin-2-ol, 3-Butin-1-ol, Propagylalkohol, 1-tert-Butoxy-2-propanol, 1-Heptanol, 2-Heptanol, 3-Heptanol, 4-Heptanol, 1-Octanol, 2-Octanol, 3-Octanol, 4-Octanol, 1-Nonanol, 2-Nonanol, 3-Nonanol, 4-Nonanol, 5-Nonanol, 1-Decanol, 2-Decanol, 3-Decanol, 4-Decanol, 5-Decanol, 1-Undecanol, 2-Undecanol, 3-Undecanol, 4-Undecanol, 5-Undecanol, 6-Undecanol, 1-Dodecanol, 2-Dodecanol, 3-Dodecanol, 4-Dodecanol, 5-Dodecanol, 6-Dodecanol oder Mischungen davon.

4. Verfahren nach einem der vorstehenden Ansprüche, **dadurch gekennzeichnet, dass** das Polyol der Komponente A) ausgewählt ist aus der Gruppe, umfassend oder bestehend aus

   A3) Polyethercarbonatpolyole,
   A4) Polyetherpolyole, Polyesterpolyole, Polycarbonatpolyole

   und/oder Mischungen von diesen, wobei das Polyol der Komponente A) bevorzugt wenigstens ein Polyethercarbonatpolyol A3) umfasst.

5. Verfahren nach einem der vorstehenden Ansprüche, **dadurch gekennzeichnet, dass** im ersten Schritt ein Teil des Polyols der Komponente A) bedeutet, dass 20,0 bis 80,0 Gew.-%, bevorzugt 30,0 bis 70,0 Gew.-%, besonders bevorzugt 50,0 bis 65,0 Gew.-% der gesamten Menge des Polyols der Komponente A) eingesetzt wird.

6. Verfahren nach einem der vorstehenden Ansprüche, **dadurch gekennzeichnet, dass** das aliphatische oligomere Polyisocyanat der Komponente B) Isocyanat-tragende Oligomere, gebildet aus (2n+1) aliphatischen Polyisocyanaten, umfasst, wobei n eine natürliche Zahl von 1 bis 10 ist und das aliphatische oligomere Polyisocyanat der Komponente B) zu wenigstens 90 Gew.-% aus diesen Isocyanat-tragenden Oligomeren besteht, wobei das aliphatische oligomere Polyisocyanat der Komponente B) vorzugsweise ein Isocyanat-tragendes Trimer umfasst, wobei die Komponente B) insbesondere eine Mischung aus diesem Trimer und wenigstens einem weiteren Isocyanat-tragenden Oligomerenthält, bei dem n eine natürliche Zahl von 2 bis 10 ist und das aliphatische oligomere Polyisocyanat der Komponente B) zu wenigsten 30,0 Gew.-%, bevorzugt 30,0 bis 80,0 Gew.-% aus diesen Isocyanat-tragenden Trimeren besteht.

7. Verfahren nach einem der vorstehenden Ansprüche, **dadurch gekennzeichnet, dass** das aliphatische oligomere Polyisocyanat der Komponente B) Isocyanurat-, Iminooxadiazindion-, und/oder Biuret-Gruppen enthält.

8. Verfahren nach einem der vorstehenden Ansprüche, **dadurch gekennzeichnet, dass** das monomere aliphatische Polyisocyanat der Komponente B) ausgewählt ist aus der Gruppe, umfassend oder bestehend aus 1,5-Pentamethylen-Diisocyanat, 1,6-Hexamethylen-Diisocyanat, 1-Isocyanato-3-isocyanato-methyl-3,5,5-trimethylcyclohexan, Dicyclohexylmethan-4,4'-diisocyanate oder Mischungen davon und/oder das dimere aliphatische Polyisocyanat der Komponente B) ausgewählt ist aus dimeren Verbindungen von 1,5-Pentamethylen-Diisocyanat, 1,6-Hexamethylen-Diisocyanat, 1-Isocyanato-3-isocyanato-methyl-3,5,5-trimethylcyclohexan, Dicyclohexylmethan-4,4'-diisocyanate oder gemischten Dimeren davon.

9. Verfahren nach einem der vorstehenden Ansprüche, **dadurch gekennzeichnet, dass** der Gesamtgehalt an metallorganischen Katalysatoren, insbesondere an Dibutylzinndilaurat, Dibutylzinnoxid, Dimethylzinndineodecanoat, Dioctylzinndineodecanoat und Dimethylzinn(IV)dimercaptid, in der Zusammensetzung weniger als 10,0 ppm, bevorzugt weniger als 5,0 ppm, besonders bevorzugt weniger als 3,0 ppm, ganz besonders bevorzugt weniger als 1,0 ppm, beträgt oder, dass die Zusammensetzung keine metallorganischen Katalysatoren, insbesondere Dibutylzinndilaurat, Dibutylzinnoxid, Dimethylzinndineodecanoat, Dioctylzinndineodecanoat und Dimethylzinn(IV)dimercaptid, umfasst.

10. Verfahren nach einem der vorstehenden Ansprüche, **dadurch gekennzeichnet, dass** der Gelkatalysator D1) ausgewählt ist aus der Gruppe, umfassend oder bestehend aus anorganischen Katalysatoren, wie Zinn(II)bis(2-ethylhexanoat), Zinn(II)bis(neodecanoat), Bismuth(III)tris(2-ethylhexanoat), Bismuth(III)tris(neodecanoat) oder Mischungen davon und/oder, dass der Treibkatalysator D2) ausgewählt ist aus der Gruppe, umfassend oder bestehend aus

Bis[2-(N,N-dimethylamino)ethyl]ether, 1,8-Diazabicyclo[5.4.0]undec-7-en, 1,1,3,3-Tetramethylguanidin oder Mischungen davon.

11. Verfahren nach einem der vorstehenden Ansprüche, **dadurch gekennzeichnet, dass** in dem ersten Schritt die Umsetzung bei einer Temperatur von 20 bis 50 °C durchgeführt wird, bevorzugt bei 25 bis 45 °C und/oder, dass in dem zweiten Schritt die Präpolymer-Mischung aus NCO-funktionellem Präpolymer und überschüssiger Komponente B) eine Temperatur von 25 bis 60 °C aufweist, bevorzugt von 40 bis 50 °C.

12. Präpolymer-Mischung aus einem NCO-funktionellen Präpolymer und überschüssiger Komponente B), hergestellt oder erhältlich durch ein Verfahren nach einem der Ansprüche 1 bis 11, wobei die Mischung lagerstabil ist, wobei lagerstabil bedeutet, dass die Präpolymer-Mischung über einen Zeitraum von wenigstens 1 Monat, bevorzugt von wenigstens 2 Monaten, besonders bevorzugt von wenigstens 4 Monaten bei 25 °C ± 5 °C unter Stickstoffatmosphäre eine Viskositätsänderung (gemessen bei 45°) von höchstens 8000 mPa·s, bevorzugt von höchstens 5000 mPa·s, besonders bevorzugt von höchstens 3000 mPa·s aufweist, bestimmt mittels Viskosimetrie.

13. Aliphatischer Polyurethan-Weichschaumstoff, erhalten oder erhältlich durch ein Verfahren nach einem der Ansprüche 1 bis 11, wobei der Polyurethan-Weichschaumstoff vorzugsweise eine Stauchhärte im 4. Zyklus von ≤ 15,0 kPa aufweist, bevorzugt von ≤ 14,0 kPa und besonders bevorzugt von 4,0 kPa bis 12,0 kPa, gemessen nach DIN EN ISO 3386-1 und/oder einen Druckverformungsrest-Wert (DVR) von ≤ 6,0 % aufweist, bevorzugt von ≤ 5,0 %, weiter bevorzugt von ≤ 4,0 %, besonders bevorzugt von 0,1 bis 4,0 %, gemessen nach DIN EN ISO 1856 -2008.

14. Verwendung eines aliphatischen Polyurethan-Weichschaumstoffs gemäß Anspruch 13 als oder zur Herstellung von körperstützenden Elementen, insbesondere Polster, Matratzen, Möbeln, Schuheinlagen, Automobilarmauflagen, Automobilsitzen und Motorradsitzen.

15. Verwendung einer monohydroxyfunktionellen Verbindung in Kombination mit einem aliphatischen oligomeren Polyisocyanat und gegebenenfalls einem aliphatischen monomeren Polyisocyanat zur Herstellung von einem aliphatischen Polyurethan-Weichschaumstoff, insbesondere nach einem Verfahren nach einem der Ansprüche 1 bis 11, wobei der aliphatische Polyurethan-Weichschaumstoff insbesondere weniger als 10,0 ppm, bevorzugt weniger als 5,0 ppm, besonders bevorzugt weniger als 3,0 ppm, ganz besonders bevorzugt weniger als 1,0 ppm an metallorganischen Katalysatoren, insbesondere an Dibutylzinndilaurat, Dibutylzinnoxid, Dimethylzinndineodecanoat, Dioctylzinndineodecanoat, Dimethylzinn(IV)dimercaptid oder Mischungen davon, enthält.

Europäisches Patentamt
European Patent Office
Office européen des brevets

# EUROPÄISCHER RECHERCHENBERICHT

Nummer der Anmeldung
EP 22 15 3912

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 8 946 315 B2 (NIESTEN MEIKE [DE]; DÖRR SEBASTIAN [DE]; BAYER IP GMBH [DE]) 3. Februar 2015 (2015-02-03) * Spalte 6, Zeile 59; Ansprüche 1,9,10; Beispiele 2-7; Tabelle 1; Verbindungen A2,B,G * ----- | 1-15 | INV. C08G18/28 C08G18/32 C08G18/44 C08G18/66 C08G18/79 C08G18/80 |
| X | US 2013/131206 A1 (NIESTEN MEIKE [DE] ET AL) 23. Mai 2013 (2013-05-23) * Absatz [0057]; Ansprüche 19,32; Beispiele 1-10 * ----- | 1-15 | |
| A | EP 3 533 815 A1 (COVESTRO DEUTSCHLAND AG [DE]) 4. September 2019 (2019-09-04) * Absatz [0011]; Ansprüche 1-14 * ----- | 1-15 | |
| A | US 2021/284786 A1 (WILLIAMS-HARRY MICHELE N [US] ET AL) 16. September 2021 (2021-09-16) * Absätze [0048] - [0050]; Ansprüche 1-15 * ----- | 1-15 | |
| | | | RECHERCHIERTE SACHGEBIETE (IPC) |
| | | | C08G |

Der vorliegende Recherchenbericht wurde für alle Patentansprüche erstellt

1

| Recherchenort | Abschlußdatum der Recherche | Prüfer |
|---|---|---|
| München | 28. Juni 2022 | Buestrich, Ralf |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 22 15 3912

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-06-2022

| Im Recherchenbericht angeführtes Patentdokument | Datum der Veröffentlichung | Mitglied(er) der Patentfamilie | Datum der Veröffentlichung |
|---|---|---|---|
| US 8946315 B2 | 03-02-2015 | EP 2523988 A1 | 21-11-2012 |
| | | US 2012289622 A1 | 15-11-2012 |
| | | WO 2011083144 A1 | 14-07-2011 |
| US 2013131206 A1 | 23-05-2013 | CN 103080172 A | 01-05-2013 |
| | | EP 2585506 A1 | 01-05-2013 |
| | | JP 2013532216 A | 15-08-2013 |
| | | US 2013131206 A1 | 23-05-2013 |
| | | WO 2011161033 A1 | 29-12-2011 |
| EP 3533815 A1 | 04-09-2019 | CN 111868129 A | 30-10-2020 |
| | | EP 3533815 A1 | 04-09-2019 |
| | | EP 3759150 A1 | 06-01-2021 |
| | | US 2020392281 A1 | 17-12-2020 |
| | | WO 2019166365 A1 | 06-09-2019 |
| US 2021284786 A1 | 16-09-2021 | CA 3106668 A1 | 06-02-2020 |
| | | EP 3830168 A1 | 09-06-2021 |
| | | US 2021284786 A1 | 16-09-2021 |
| | | WO 2020028071 A1 | 06-02-2020 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 2447067 A1
- US 20060160977 A1
- EP 0006150 B1
- EP 3296336 A1
- WO 02074826 A1
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- EP 1359177 A
- EP 0000389 A
- WO 2014064130 A
- WO 2014064130 A1


### In der Beschreibung aufgeführte Nicht-Patentliteratur


- **G. OERTEL.** Polyurethane Handbook. 1993, 194-219
- **G. OERTEL.** Kunststoff-Handbuch. Carl-Hanser-Verlag, 1993, vol. VII, 104-127